# EUROPÄISCHE PATENTSCHRIFT

(11) **EP 3 465 023 B1**
(45) Veröffentlichungstag und Bekanntmachung des Hinweises auf die Patenterteilung: **15.12.2021**
(21) Anmeldenummer: 17734229.2
(22) Anmeldetag: 31.05.2017
(51) Int. Cl.: F25B 6/04, F25B 9/00, F25B 41/00, F25B 49/00, F25B 6/02

(54) **KÄLTEANLAGE, KÄLTEANLAGENSYSTEM UND VERFAHREN MIT KÄLTEMITTELVERLAGERUNG**
REFRIGERATION INSTALLATION, REFRIGERATION INSTALLATION SYSTEM, AND METHOD WITH COOLANT DISPLACEMENT
INSTALLATION DE REFROIDISSEMENT, SYSTÈME D'INSTALLATION DE REFROIDISSEMENT ET PROCÉDÉ À DÉPLACEMENT DE RÉFRIGÉRANT

(30) Priorität: 06.06.2016 DE 102016110443
(43) Veröffentlichungstag der Anmeldung: 10.04.2019
(73) Patentinhaber: Konvekta Aktiengesellschaft, 34613 Schwalmstadt-Ziegenhain (DE)
(72) Erfinder: SONNEKALB, Michael, 34613 Schwalmstadt (DE); FINK, Sebastian, 34628 Willingshausen (DE); MERLE, Philipp, 34628 Willingshausen (DE)
(74) Vertreter: Lindinger, Bernhard
(86) Internationale Anmeldenummer: PCT/DE2017/100465
(87) Internationale Veröffentlichungsnummer: WO 2017/211351

(56) Entgegenhaltungen:
- EP-A2- 2 623 873
- DE-A1-102008 047 753
- DE-A1-102014 203 895
- JP-A- 2003 121 019

## Beschreibung

### Gebiet der Technik:

Die Erfindung betrifft eine Kälteanlage zum Temperieren von Luft mit mindestens einem Verdichter, mindestens einem Expansionsorgan und mindestens einem ersten und einem zweiten jeweils als Kondensator oder Gaskühler betreibbaren Wärmetauscher und mindestens einem von diesen oder weiteren als Verdampfer betreibbaren Wärmetauscher wobei in Kätemittelleitung nach zumindest einem Verdichter an oder nach einer Abzweigung und vor oder am Kondensator- oder Gaskühlereingang des ersten Wärmetauschers ein erstes Ventil und am oder nach dem Kondensator- oder Gaskühlerausgang des ersten Wärmetauschers und vor einem oder als ein Expansionsorgan ein zweites Ventil angeordnet sind, wobei die Kälteanlage zumindest mit zur Kältemittelverlagerung eine Ventilsteuerung für das erste und zweite Ventil mit zumindest einer ersten und einer zweiten Ventilschaltungsmöglichkeiten mit erstens geöffnetem ersten Ventil bei gleichzeitig geschlossenem zweiten Ventil oder zweitens mit geschlossenem ersten Ventil bei gleichzeitig geöffnetem zweiten Ventil enthält. Die Erfindung betrifft zudem ein Kälteanlagensystem mit einer derartigen Kälteanlage sowie ein Verfahren zur Kältemittelverlagerung für derartige Kälteanlagen sowie Kälteanlagensysteme.

Ein als Kondensator oder Gaskühler betreibbarer Wärmetauscher ist ein Wärmetauscher, der nach seiner Konstruktion geeignet ist, als Kondensator oder Gaskühler in einer Kälteanlage eingesetzt zu werden.

Eine Abzweigung ist eine Stelle in der Kältemittelleitung an der sie sich verzweigt.

### Stand der Technik:

Kälteanlagen mit wenigstens zwei als Kondensator oder Gaskühler betreibbaren Wärmetauschern sind bei größeren Fahrzeugen mit verschiedenen Klimatisierungszonen wie beispielsweise in einigen Omnibussen oder Schienenfahrzeugen oder beim Klimatisieren von Räumen nicht ungewöhnlich. Auch sind Wärmetauscher, die sowohl als Kondensator oder Gaskühler als auch als Verdampfer betreibbar sind, keine Seltenheit. So ist beispielsweise eine Kälteanlage mit zwei solchen umschaltbaren Wärmetauschern in DE 10 2014 203 895 A1 beschrieben.

Bei einem als Gaskühler betriebenen Wärmetauscher verflüssigt sich das Kältemittel wie beispielsweise CO2 nicht bei dessen Abkühlung im Wärmetauscher. Es wird im transkritischen Bereich betrieben.

Beim Betrieb von Kälteanlagen ist das Problem bekannt, dass der Druck im Hochdruckbereich des Kältemittelkreislaufs beispielsweise bei erhöhter Außentemperatur zu hoch wird, oder bei beispielsweise einer niedrigen Außentemperatur zu niedrig wird. Bei heißer Umgebungstemperatur wird bei manchen Kälteanlagen bekanntermaßen Kältemittel abgelassen, was aber zu Dampfblasen beim Eintritt zum Expansionsorgan führen kann und die Kälteleistung verringert. Beispielsweise sind Fahrzeugklimaanlagen bekannt, bei denen ein Überdruckschalter bei zu hohem Druck im Hochdruckbereich die Anlage automatisch abschaltet und damit der Fahrgastraum nicht mehr gekühlt wird.

In DE 10 2007 043 162 A1 wird eine dort als Klimaanlage bezeichnete Kälteanlage offenbart, bei der im Kältemittelkreislauf ein Überströmventil zwischen dem Ausgang des Kondensators und dem Eingang des Expansionsorgans angeordnet ist, das abhängig vom Betriebsdruck automatisch öffnet und Kältemittel von der Hochdruckseite in einen Behälter auf der Niederdruckseite strömen lässt, so dass dieses Kältemittel zeitweise dem Kältemittelkreis aus Verdichter, Kondensator, Expansionsorgan und Verdampfer entzogen wird. Hierbei ist aber nachteilig neben den Wärmetauschern ein zusätzlicher Behälter erforderlich, was insbesondere zusätzliches Material mit entsprechenden Kosten sowie zusätzlichen Platzverbrauch und mehr Gewicht bedeutet.

In US 2009/0320504 A1 und in DE 10 2008 047 753 A1 ist jeweils eine Kälteanlage mit mindestens einem Verdichter, mindestens einem Expansionsorgan und mindestens einem ersten und einem zweiten jeweils als Kondensator betreibbaren Wärmetauscher und einem von als Verdampfer betreibbaren Wärmetauscher offenbart, wobei in Kältemittelleitung nach zumindest einem Verdichter an oder nach einer Abzweigung und vor oder am Kondensatoreingang des ersten Wärmetauschers ein erstes Ventil und am oder nach dem Kondensatorausgang des ersten Wärmetauschers und vor einem oder als ein Expansionsorgan ein zweites Ventil angeordnet sind. Doch weder in US 2009/0320504 A1 noch in DE 10 2008 047 753 A1 wird eine Lösung für die Probleme einerseits eines Überdrucks und andererseits eines Unterdrucks im Hochdruckbereich bzw. von zu wenig bzw. zu viel Kältemittel im gerade betriebenen Kältemittelkreislauf offenbart, sondern bei US 2009/0320504 A1 eine Lösung zur Entfrostung des Verdampfers und bei
DE 10 2008 047 753 A1 eine Lösung für eine Temperierung mehrerer zu kühlender Räume auf unterschiedliche Nutztemperaturniveaus, wobei auch bei Stillstand des Fahrzeugs und ausgeschalteter Antriebsmaschine das niedrigste Nutztemperaturniveau aufrechterhalten werden kann, vorgestellt.

Sowohl in DE 10 2011 118 162 A1 als auch in der erst am 17. November 2016 also nach Prioritätsdatum veröffentlichten DE 10 2015 007 565 B3 ist eine Kälteanlage mit mindestens einem Verdichter, mindestens einem Expansionsorgan und mindestens einem ersten und einem zweiten jeweils als Kondensator betreibbaren Wärmetauscher und einem als Verdampfer betreibbaren Wärmetauscher offenbart, wobei in Kältemittelleitung nach zumindest einem Verdichter an oder nach einer Abzweigung und vor Kondensatoreingang des ersten Wärmetauschers ein erstes Ventil und nach dem Kondensatorausgang des ersten Wärmetauschers als ein Expansionsorgan ein zweites Ventil angeordnet sind. Ferner ist in DE 10 2011 118 162 A1 und in DE 10 2015 007 565 B3 jeweils eine Kältemittelverlagerung von Kältemittel in sowie Rückholung aus den/(m) gerade nicht als Kondensator mit Kältemittel durchströmten ersten Wärmetauscher offenbart. Jedoch enthält nachteilig die in DE 10 2011 118 162 A1 offenbarte Kälteanlage zusätzlich zwingend einen inneren Wärmeübertrager sowie kennzeichnend einen absperrbaren Bypass zur Durchströmung der Hochdruckpassage des inneren Wärmeübertrages, der zwischen dem Hochdruckausgang des inneren Wärmeübertrages und dem Kondensatorbereichs des ersten Wärmetauschers angeordnet ist. Diese dort offenbarte Kälteanlage mit zusätzlich einem inneren Wärmeübertrager sowie dem besagten Bypass und die dazu offenbarte Regelung der Kältemittelverlagerung sind somit aufwendig, kompliziert und umständlich. Zwar ist in der in DE 10 2015 007 565 B3 gezeigten Anlage kein Bypass als erforderlich offenbart, aber es werden dabei zusätzlich als wesentliche erforderliche Merkmale der dortigen Anlage ein innerer Wärmeübertrager als auch eine als Kapillarleitung ausgebildete Auslagerungsleitung offenbart. Die dort offenbarte Kälteanlage mit zusätzlich einem inneren Wärmeübertrager sowie der als Kapillarleitung ausgebildete Auslagerungsleitung und die dazu offenbarte Regelung der Kältemittelverlagerung sind somit aufwendig, kompliziert und umständlich.

In JP 2003 121019 A ist eine Kälteanlage mit einem Verdichter, einem einzigen Expansionsorgan und einem ersten und einem zweiten jeweils als Kondensator betreibbaren Wärmetauscher und einem weiteren als Verdampfer betreibbaren Wärmetauscher offenbart, wobei in Kältemittelleitung nach dem Verdichter, nach einer Abzweigung und vor dem Kondensatoreingang des ersten Wärmetauschers ein erstes Ventil und nach dem Kondensatorausgang des ersten. Wärmetauschers und vor dem Expansionsorgan ein zweites Ventil angeordnet sind. Ferner ist in JP 2003 121019 A unter anderem zur dort offenbarten Kälteanlage eine Ventilschaltmöglichkeit mit geöffnetem ersten Ventil bei gleichzeitig geschlossenem zweiten Ventil beschrieben. Zu der in JP 2003 121019 A offenbarten Kälteanlage ist bei der Ventilsteuerung eine Ventilschaltmöglichkeit für eine Kältemittelverlagerung durch Rückholung und damit Leerung von Kältemittel aus dem gerade nicht als Kondensator mit Kältemittel durchströmten ersten Wärmetauscher nicht offenbart.

Der Erfindung liegt daher die erste Aufgabe zugrunde, eine verbesserte Kälteanlage mit der Möglichkeit von Kältemittelverlagerung umfassend mindestens einen Kältemittelkreislauf mit mindestens einem Verdichter, mindestens einem Expansionsorgan und mindestens einem als Kondensator oder Gaskühler betreibbaren Wärmetauscher und mindestens einem davon oder weiteren als Verdampfer betreibbaren Wärmetauscher bereitzustellen. Eine entsprechende zweite Aufgabe ist die Bereitstellung eines verbesserten Kälteanlagensystems mit einer verbesserten Kälteanlage gemäß der ersten Aufgabe. Ferner ist eine dritte Aufgabe ein Verfahren zur Kältemittelverlagerung mit solcher verbesserter Kälteanlage bereitzustellen.

### Zusammenfassung der Erfindung:

Die erste Aufgabe wird durch eine Kälteanlage gemäß den Merkmalen des Anspruchs 1 gelöst.

Dadurch kann ohne zusätzlichen Sammelbehälter ein Kondensator- oder Gaskühlerbereich eines Wärmetauschers zumindest mit zum Sammeln von Kältemittel und auch je nach Bedarf zum Abgeben von Kältemittel an den gerade betriebenen Kältemittelkreislauf genutzt werden. Damit kann automatisch im Kondensator- oder Gaskühlerbereich des zumindest einen gerade nicht mit Kältemittel durchströmten Wärmetauschers Kältemittel gesammelt und dem gerade durchströmten Kältemittelkreislauf entzogen werden und somit die dortige Kältemittelmenge und/oder den Druck dort verringern.
Diese Möglichkeit der Kältemittelverlagerung spart Kosten, Material, Gewicht sowie Raum für einen sonstigen oft zur Kältemittelverlagerung benötigten zusätzlichen Sammelbehälter. Ein gerade nicht für die Kältemittelabkühlung betriebener Kondensator- oder Gaskühlerbereich eines Wärmetauschers der erfindungsgemäßen Vorrichtung kann so sinnvoll einfach und ohne großen Aufwand genutzt werden.

In den Unteransprüchen sind vorteilhafte Ausgestaltungen, Weiterbildungen und Verbesserungen des jeweiligen Gegenstandes der Erfindung angegeben.

Gemäß einer vorteilhaften Weiterbildung der erfindungsgemäßen Kälteanlage ist in Kältemittelleitung an oder nach der Abzweigung im abzweigenden Bereich und vor oder am Kondensator- oder Gaskühlereingang des zweiten Wärmetauschers ein drittes Ventil und am oder nach dem Kondensator- oder Gaskühlerausgang des zweiten Wärmetauschers und vor einem oder als Expansionsorgan ein viertes Ventil angeordnet, wobei die Kälteanlage die Ventilsteuerung für das dritte und vierte Ventil mit zumindest einer ersten und einer zweiten Ventilschaltungsmöglichkeit mit erstens geöffnetem dritten Ventil bei gleichzeitig geschlossenem vierten Ventil oder zweitens mit geschlossenem dritten Ventil bei gleichzeitig geöffnetem vierten Ventil enthält. Dadurch kann ein Kondensator- oder Gaskühlerbereich des zweiten Wärmetauschers für die Kältemittelverlagerung eingesetzt werden. Die Kältemittelverlagerung kann dann auch wechselseitig je nach dem, welcher der beiden Wärmetauscher gerade zur Kühlung des Kältemittels im Einsatz ist, beim Kondensator- oder Gaskühlbereich des jeweils anderen Wärmetauschers erfolgen. Vorzugsweise sind bei einer solchen Weiterbildung das erste und dritte Ventil als zusammen ein einziges Dreiwegeventil ausgebildet. Dieses spart Kosten, Material, Gewicht und Platz.

Gemäß einer vorteilhaften Ausgestaltung der erfindungsgemäßen Kälteanlage umfasst die Ventilsteuerung für das erste und zweite Ventil und/oder für das dritte und vierte Ventil eine dritte Ventilschaltungsmöglichkeit mit geöffnetem ersten und gleichzeitig geöffnetem zweiten Ventil beziehungsweise geöffnetem dritten und gleichzeitig geöffnetem vierten Ventil. Dadurch können die Kondensator- oder Gaskühlerbereiche auf einfache Weise durch lediglich entsprechendes Umschalten der Ventile auch für die Kühlung des durchströmenden Kältemittels betrieben werden.

Nach einer vorteilhaften Ausgestaltung der erfindungsgemäßen Kälteanlage umfasst die Ventilsteuerung die automatische Regelung, die beim Unterschreiten einer vorgegeben Kältemittelmenge im durchströmten Kältemittelkreislauf für zumindest einen gerade nicht als Kondensator oder Gaskühler mit Kältemittel durchströmten Wärmetauscher die zweite Ventilschaltungsmöglichkeit einstellt. Damit kann automatisch das dort vorher im Kondensator- oder Gaskühlerbereich gesammelte Kältemittel dem gerade betriebenen Kältemittelkreislauf zugeführt werden und so die dortige Kältemittelmenge vergrößern also die Kühlleistung verbessern.

Gemäß einer weiteren vorteilhaften Ausgestaltung der erfindungsgemäßen Kälteanlage umfasst die Ventilsteuerung die automatische Regelung, die beim Unterschreiten eines vorgegebenen Drucks des Kältemittels vor oder an einem Expansionsorgan im durchströmten Kältemittelkreislauf für zumindest einen gerade nicht als Kondensator oder Gaskühler mit Kältemittel durchströmten Wärmetauscher die zweite Ventilschaltungsmöglichkeit einstellt. Dadurch kann automatisch das dort vorher im Kondensator- oder Gaskühlerbereich gesammelte Kältemittel dem gerade betriebenen Kältemittelkreislauf zugeführt werden und somit den Druck dort vergrößern also die Kühlleistung verbessern.

Vorzugsweise sind/ist der erste und/oder zweite Wärmetauscher als umschaltbare(r) Wärmetauscher mit in einem Gehäuse integrierten mit Kältemittel beaufschlagbaren Heizrohren und mit Kältemittel beaufschlagbaren Kühlrohren ausgebildet und sind/ist im durch den jeweils anderen der beiden als Kondensator oder Gaskühler betreibbaren Wärmetauscher verlaufenden Kältemittelkreislauf als Verdampfer mit vorgeschaltetem Expansionsorgan betreibbar.

Umschaltbar bedeutet dabei aber nicht, dass nicht sowohl die Heizrohre als auch die Kühlrohre geleichzeitig mit Kältemittel beaufschlagbar sind, sondern dass Kondensator- oder Gaskühlerbereich und Verdampferbereich parallel in einem Wärmetauscher möglich sind und der Wärmetauscher für beide Betriebsarten betreibbar gebaut ist. Damit sind wechselseitig zwei Kältemittelkreisläufe bei zwei Wärmetauschern möglich, wobei der jeweils nicht für die Kältemittelkühlung betriebene Kondensator- oder Gaskühlerbereich der Kältemittelverlagerung dienen kann.

Gemäß einer vorteilhaften Weiterbildung umfasst zumindest einer der wenigstens ersten und zweiten als Kondensator oder Gaskühler betreibbaren Wärmetauscher in seinem Kondensator- oder Gaskühlerbereich wenigstens einen in Kältemittelleitung an die als Flachrohre ausgebildeten Heizrohre angeschlossen Sammelbehälter für Kältemittel. Damit vergrößert sich vorteilhaft das Volumen für die Kältemittelverlagerung.

Als weitere Verbesserung sind/ist das erste und/oder dritte Ventil als Druckventil(e) ausgebildet. Dadurch kann automatisch das jeweilige Ventil bei Überschreiten eines vorbestimmten Drucks öffnen oder bei Unterschreiten eines vorbestimmten Drucks schließen. Somit ist vorteilhaft zumindest ein Teil der Ventilsteuerung gleich in dem jeweiligen Ventil enthalten.

Vorzugsweise sind/ist das zweite und/oder vierte Ventil als Drosselventil(e) ausgebildet. Ein Drosselventil kann als Expansionsorgan dienen.

Gemäß einer vorteilhaften Weiterbildung der erfindungsgemäßen Kälteanlage ist in Kältemittelleitung am oder nach dem Kondensator- oder Gaskühlerausgang des ersten Wärmetauschers und vor dem zweiten Ventil ein Abzweig zu einem weiteren Ventil enthalten, das in Kältemittelleitung vor oder am Verdampfereingang des ersten Wärmetauschers angeordnet ist. Damit kann im Kondensator- oder Gaskühlerbereich des ersten Wärmetauschers gesammeltes Kältemittel auch über den Verdampferbereich desselben Wärmetauschers dem dadurch verlaufenden Kältemittelkreislauf zugeführt werden.

Vorzugsweise ist in Kältemittelleitung am oder nach dem Kondensator- oder Gaskühlerausgang des zweiten Wärmetauschers und vor dem vierten Ventil ein Abzweig zu einem weiteren Ventil enthalten, das in Kältemittelleitung vor oder am Verdampfereingang des zweiten Wärmetauschers angeordnet ist. Damit kann im Kondensator- oder Gaskühlerbereich des zweiten Wärmetauschers gesammeltes Kältemittel zusätzlich auch über den Verdampferbereich desselben Wärmetauschers dem dadurch verlaufenden Kältemittelkreislauf zugeführt werden.

Vorteilhaft ist/sind die weitere(n) Ventil(e) als Expansionsorgan(e), vorzugsweise als Drosselventil(e) ausgebildet. Somit wird auch noch die Kühlwirkung des jeweiligen nachgeschalteten Verdampfers verbessert.

Nach einer vorteilhaften Ausgestaltung der erfindungsgemäßen Kälteanlage ist sie als Kälteanlage für ein Fahrzeug ausgebildet. Sie kann so beispielsweise zum klimatisieren eines Fahrgastraums eingesetzt werden.

Besonders vorteilhaft ist dabei eine Ausgestaltung einbaubar auf einem oder teilintergiert in einem Fahrzeugdach, beispielsweise eines Omnibusses oder Schienenfahrzeugs.

Schließlich können die Merkmale der Unteransprüche im Wesentlichen frei miteinander und nicht durch die in den Ansprüchen vorliegende Reihenfolge festgelegt kombiniert werden, sofern sie unabhängig voneinander sind.

Die zweite Aufgabe wird durch ein Kälteanlagensystem gemäß den Merkmalen des Anspruchs 13 gelöst. Entsprechende Ausführungen wie zur erfindungsgemäßen Kälteanlage und zu deren vorteilhaften Ausgestaltungen, Weiterbildungen und Verbesserungen gelten auch hinsichtlich des erfindungsgemäßen Kälteanlagensystems.

Die dritte Aufgabe wird durch ein Verfahren gemäß den Merkmalen des Anspruchs 14 gelöst. Dieses ist ein kostengünstiges, materialeinsparendes und platzsparendes Verfahren zur Kältemittelverlagerung. Ferner gelten entsprechend die Ausführungen zur erfindungsgemäßen Kälteanlage und zu deren vorteilhaften Ausgestaltungen, Weiterbildungen und Verbesserungen bezüglich des erfindungsgemäßen Verfahrens. Ergänzend dazu wird gemäß einer vorteilhaften Weiterbildung des erfindungsgemäßen Verfahrens die Ventilsteuerung für das dritte und vierte Ventil in der Weise geregelt, dass bei geschalteter erster Ventilschaltungsmöglichkeit gegebenenfalls Kältemittel im Kondensator- oder Gaskühlerbereich des zweiten Wärmetauschers gehalten oder gesammelt wird und bei geschalteter zweiter Ventilschaltungsmöglichkeit das im Kondensator- oder Gaskühlerbereich des zweiten Wärmetauschers gegebenenfalls vorhandene Kältemittel dem durch den Kondensator- oder Gaskühlerbereich des ersten Wärmetauschers betriebenen Kältemittelkreislauf zugeführt wird. Damit findet auch eine Kältemittelverlagerung beim Kondensator- oder Gaskühlerbereich des zweiten Wärmetauschers statt. Somit ist eine flexiblere Verfahrensweise bei der Kältemittelverlagerung gegeben.

Gemäß einer vorteilhaften Weiterbildung des erfindungsgemäßen Verfahrens enthält dieses die Schritte des Erkennens eines Unterschreiten einer vorgegeben Kältemittelmenge im momentan durchströmten Kältemittelkreislauf und darauf des Einstellens der für den momentan nicht als Kondensator oder Gaskühler mit Kältemittel durchströmten Wärmetauscher zweiten Ventilschaltungsmöglichkeit. Dadurch wird automatisch dem betrieben Kältemittelkreislauf Kältemittel zugeführt und somit dessen Wirkung verbessert.

Eine weitere Verbesserung sind die Verfahrensschritte des Erkennens eines Unterschreitens eines vorgegeben Drucks des Kältemittels nach dem Verdichter im momentan durchströmten Kältemittelkreislauf und darauf des Einstellens der für den momentan nicht als Kondensator oder Gaskühler mit Kältemittel durchströmten Wärmetauscher zweiten Ventilschaltungsmöglichkeit. Dadurch wird automatisch dem betriebenen Kältemittelkreislauf Kältemittel zugeführt und somit der Druck erhöht.

Gemäß einer vorteilhaften Ausgestaltung des erfindungsgemäßen Verfahrens wird die Ventilsteuerung für das erste und zweite Ventil und/oder für das dritte und vierte Ventil in der Weise geregelt, dass bei jeweils dritter Ventilschaltungsmöglichkeit mit geöffnetem ersten und gleichzeitig geöffnetem zweiten Ventil der erste Wärmetauscher als Kondensator oder Gaskühler und/oder mit geöffnetem dritten und gleichzeitig geöffnetem vierten Ventil der zweite Wärmetauscher als Kondensator oder Gaskühler betrieben werden/wird. Demzufolge sind die Kondensator oder Gaskühler auch zum Kühlen des Kältemittels betreibbar.

Vorzugsweise umfasst das erfindungsgemäße Verfahren die Schritte des Einstellens der für das dritte und vierte Ventil dritten Ventilschaltungsmöglichkeit und des Schaltens des ersten als umschaltbarer Wärmetauscher ausgebildeten Wärmetauschers als Verdampfer im durch den zweiten als Kondensator oder Gaskühler betriebenen Wärmetauscher verlaufenden Kältemittelkreislauf. Dieses Verfahren mit Kältemittelverlagerung eignet sich für eine kompakte Bauweise mit umschaltbarem Wärmetauscher. Ebenso vorteilhaft sind die Verfahrensschritte des Einstellens der für das erste und zweite Ventil dritten Ventilschaltungsmöglichkeit und des Schaltens des zweiten als umschaltbarer Wärmetauscher ausgebildeten Wärmetauschers als Verdampfer im durch den ersten als Kondensator oder Gaskühler betriebenen Wärmetauscher verlaufenden Kältemittelkreislauf.

Gemäß einer vorteilhaften Weiterbildung des erfindungsgemäßen Verfahrens umfasst es die Schritte des Erkennens eines Überschreitens eines vorgegeben Drucks des Kältemittels vorm oder am entweder geschlossenem ersten oder geschlossenem dritten Ventil und darauf des Schaltens der ersten Ventilschaltmöglichkeit am entweder zuvor geschlossenen ersten oder am zuvor geschlossenen dritten Ventil. So wird Kältemittel aus dem betriebenen Kältemittelkreis in den jeweils nicht durchströmten Kondensator- oder Gaskühlerbereich eingelagert und damit automatisch der Druck im betriebenen Kältemittelkreislauf verringert. Schäden an der Kältemittelanlage durch zu hohen Druck werden vermieden.

Eine Verbesserung des erfindungsgemäßen Verfahrens sind die Schritte des Erkennens eines Überschreitens einer vorgegeben Kältemittelmenge im momentan durchströmten Kältemittelkreislauf und darauf des Schaltens der ersten Ventilschaltmöglichkeit am entweder zuvor geschlossenen ersten oder am zuvor geschlossenen dritten Ventil. Auf diese Weise wird Kältemittel aus dem betriebenen Kältemittelkreis in den jeweils nicht durchströmten Kondensator- oder Gaskühlerbereich eingelagert und damit vorteilhaft automatisch die Kältemittelmenge im betriebenen Kältemittelkreislauf verringert.

Nach einer vorteilhaften Weiterbildung des erfindungsgemäßen Verfahrens umfasst es die Alternative mit den Schritten des Schaltens der Ventilschaltmöglichkeit mit geschlossenem ersten und geschlossenem zweiten Ventil und darauf des Schaltens des Öffnens des in der am oder nach dem Kondensator- oder Gaskühlerausgang des ersten Wärmetauschers und vor dem zweiten Ventil abzweigenden Kältemittelleitung und vor oder am Verdampfereingang des als umschaltbarer Wärmetauscher ausgebildeten ersten Wärmetauschers angeordneten weiteren Ventils. So wird wahlweise das im Kondensator- oder Gaskühlerbereich des ersten Wärmetauschers gesammelte Kältemittel durch den Verdampfer desselben Wärmetauschers dem gerade dadurch betrieben Kältemittelkreislauf zugeführt. Entsprechend vorteilhaft sind die Verfahrensschritte des Schaltens der Ventilschaltungsmöglichkeit mit geschlossenem dritten und geschlossenem vierten Ventil und darauf des Schaltens des Öffnens des in der am oder nach dem Kondensator- oder Gaskühlerausgang des zweiten Wärmetauschers und vor dem vierten Ventil abzweigenden Kältemittelleitung und vor oder am Verdampfereingang des als umschaltbarer Wärmetauscher ausgebildeten zweiten Wärmetauschers angeordneten weiteren Ventils.

Schließlich können auch hinsichtlich des erfindungsgemäßen Verfahrens die Merkmale der Unteransprüche im Wesentlichen frei miteinander und nicht durch die in den Ansprüchen vorliegende Reihenfolge festgelegt kombiniert werden, sofern sie unabhängig voneinander sind.

### Kurze Beschreibung der Zeichnungen:

Anhand der Zeichnungen werden Ausführungsbeispiele der Erfindung erläutert.

Es zeigen
Figur 1a ein Ausführungsbeispiel einer Kälteanlage in erster Ventilschaltungsmöglichkeit,
Figur 1b das gleich Ausführungsbeispiel einer Kälteanlage in zweiter Ventilschaltungsmöglichkeit,
Figur 2 ein weiteres Ausführungsbeispiel einer Kälteanlage in erster Ventilschaltungsmöglichkeit,
Figur 3 ein weiteres Ausführungsbeispiel einer Kälteanlage in erster Ventilschaltungsmöglichkeit,
Figur 4 ein Ausführungsbeispiel eines Wärmetauschers mit an die als Flachrohre ausgebildeten Heizrohre angeschlossen Sammelbehälter,
Figur 5 ein Ausführungsbeispiel eins Kältemittelanlagensystems mit einer Kälteanlage und einem beispielhaft erweiterten Kältemittelkreislauf,
Figur 6 als Flussdiagramm ein Ausführungsbeispiel eines Verfahrens zur Kältemittelverlagerung, und
Figur 7 als Flussdiagramm ein weiteres Ausführungsbeispiel eines Verfahrens zur Kältemittelverlagerung.

### Ausführliche Beschreibung der Erfindung:

Alle Zeichnungen sind schematisch zu verstehen. Auf maßstabsgetreue Abbildungen wurde zum Zwecke erhöhter Klarheit der Darstellung verzichtet.

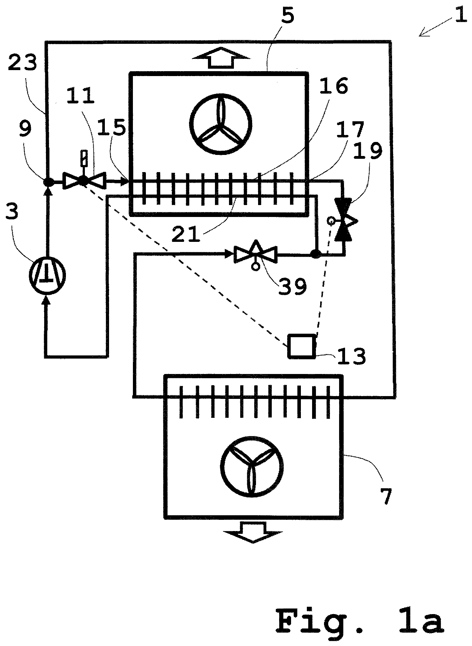

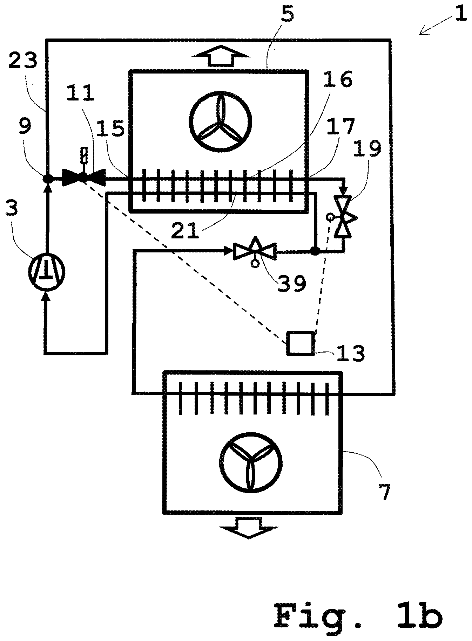

Figuren 1a und 1b zeigen eine Kälteanlage 1 zum Temperieren von Luft mit einem Verdichter 3, dem Expansionsorgan 39 sowie dem als Expansionsorgan ausgebildeten zweiten Ventil 19 und mit einem ersten Wärmetauscher 5 und einem zweiten Wärmetauscher 7. Das Kältemittel wird im Verdichter 3, wobei es nicht nur ein sondern auch mehrere Verdichter 3 denkbar wären, verdichtet und strömt in Kältemittelleitung zu einer Abzweigung 9. Die Abzweigung 9 ist die Stelle in Kältemittelleitung, an der sich die Kältemittelleitung in den einen Bereich zum Kondensator- oder Gaskühlereingang 15 des ersten Wärmetauschers 5 und in den anderen abzweigenden Bereich 23, in den der zweite Wärmetauscher 7 eingebunden ist, aufteilt. Beide Wärmetauscher 5 und 7 sind so konstruiert, dass sie als Kondensator betreibbar sind. Bei einer Kälteanlage 1, die im transkritischen Bereich betrieben wird, sind die Wärmetauscher 5 und 7 so konstruiert, dass die als Gaskühler betreibbar sind. Ein Kältemittelkreislauf der Kälteanlage 1 verläuft von der Abzweigung 9 durch den abzweigenden Bereich 23 durch den Kondensator- oder Gaskühlerbereich des zweiten Wärmetauschers 7 zum Expansionsorgan 39, wie beispielsweise ein Expansionsventil, und weiter durch den Verdampferbereich 21 des ersten Wärmetauschers 5 zurück zum Verdichter 3 und wieder zur Abzweigung 9. Dabei fungiert der erste Wärmetauscher 5 als Verdampfer. Der erste Wärmetauscher 5 ist in diesem Fall als ein umschaltbarer Wärmetauscher mit in einem Gehäuse integrierten mit Kältemittel beaufschlagbaren Heizrohren und mit Kältemittel beaufschlagbaren Kühlrohren ausgebildet. Es gibt also im ersten Wärmetauscher 5 sowohl einen Kondensator- oder Gaskühlerbereich 16 als auch einen Verdampferbereich 21 und der erste Wärmetauscher 5 ist für beide Betriebsarten betreibbar gebaut. Im anderen Bereich der Kältemittelleitung ist zwischen der Abzweigung 9 und dem Kondensator- oder Gaskühlereingang 15 des ersten Wärmetauschers 5 ein erstes Ventil 11 angeordnet. Dieses erste Ventil 11 wird von der Ventilsteuerung 13 gesteuert. Denkbar ist auch eine Ventilsteuerung direkt am ersten Ventil 11, wie beispielsweise bei einem Druckventil, dass die automatische Ventilsteuerung mit Öffnen des ersten Ventils 11 beim Überschreiten eines vorgegeben Drucks in Kältemittelleitung auf Seiten nach dem Verdichter 3 samt gleichzeitigen automatischen Schließen des als Expansionsorgan ausgebildeten zweiten Ventils 19 und beim Unterschreiten eines tieferen vorbestimmten Drucks mit automatischem Schließen des ersten Ventils 11 enthält. In Figur 1a ist das erste Ventil 11 geöffnet und gleichzeitig das zweite Ventil 19 geschlossen. Die Ventilsteuerung 13 hat dabei also die erste Ventilschaltmöglichkeit eingestellt. Somit kann vom Verdichter 3 kommendes Kältemittel durch den Kondensator- oder Gaskühlereingang 15 in den Kondensator- oder Gaskühlerbereich 16 des ersten Wärmetauschers 5 gelangen und aufgrund des geschlossenen zweiten Ventils 19 dort gesammelt werden. Es wird also Kältemittel dem durch den abzweigenden Bereich 23 mit dem zweiten Wärmetauscher 7 verlaufenden Kältemittelkreislauf entzogen und damit in den ersten Wärmetauscher 5 verlagert. Hingegen ist in Figur 1b von der Ventilsteuerung 13 die zweite Ventilschaltmöglichkeit mit geschlossenem ersten Ventil 11 und gleichzeitig geöffnetem zweiten Ventil 19 eingestellt.
Damit kann gegebenenfalls im ersten Wärmetauscher 5 gesammeltes bzw. gehaltenes Kältemittel durch den Kondensator- oder Gaskühlerausgang 17 und durch das zweite Ventil 19 zum Verdampferbereich 21 des ersten Wärmetauschers 5 strömen und so dem durch den abzweigenden Bereich 23 mit dem zweiten Wärmetauscher 7 verlaufenden Kältemittelkreislauf zugeführt werden. Das zweite Ventil 19 ist als Expansionsorgan ausgebildet, wie beispielsweise als Drosselventil, als elektrisch ansteuerbares Expansionsventil wie insbesondere als Schrittmotorventil oder als gepulstes Magnetventil. Denkbar ist auch die Variante, dass dem zweiten Ventil 19 ein Expansionsorgan nachgeschaltet ist. Ferner ist denkbar, dass die Ventilsteuerung 13 die automatische Regelung umfasst, die beim Überschreiten einer vorgegeben Kältemittelmenge im durchströmten Kältemittelkreislauf im Falle des gerade nicht als Kondensator oder Gaskühler mit Kältemittel durchströmten ersten Wärmetauscher 5 für diesen die erste Ventilschaltungsmöglichkeit einstellt.

Eine in Figuren 1a und 1b dargestellte Kälteanlage 1 ist für den Einsatz in einem Fahrzeug ausgebildet wie beispielsweise auf einem oder teilintegriert in einem Fahrzeugdach einbaubar.

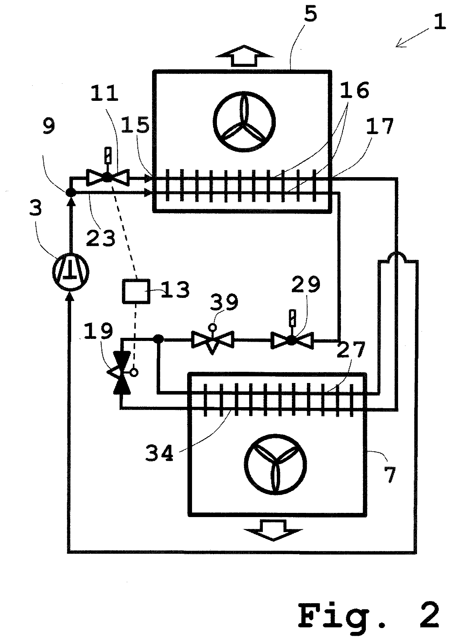

In Figur 2 ist ein weiteres Ausführungsbeispiel einer Kälteanlage 1 zum Temperieren von Luft in erster Ventilschaltungsmöglichkeit dargestellt. Nach dem Verdichter 3 befindet sich in Kältemittelleitung die Abzweigung 9 bei der die Kältemittelleitung in den abzweigenden Bereich 23 und den Bereich mit erstem Ventil 11 aufgespalten wird. Der Kältemittelkreislauf mit dem abzweigenden Bereich 23 erfolgt über einen Kondensator- oder Gaskühlerbereich 16 des ersten Wärmetauschers 5, über das Absperrventil 29 zum Expansionsorgan 39 und weiter durch den Verdampferbereich 27 des zweiten Wärmetauschers 7 zurück zum Verdichter 3. Der andere Zweig der Kältemittelleitung nach der Abzweigung 9 führt zum ersten Ventil 11 und weiter zum Kondensator- oder Gaskühlereingang 15 eines weiteren Kondensator- oder Gaskühlerbereichs 16 des ersten Wärmetauschers 5. Von dessen Kondensator- oder Gaskühlerausgang 17 führt dieser Zweig der Kältemittelleitung darauf durch den Kondensator- oder Gaskühlerbereich 34 des zweiten Wärmetauschers 7 zum zweiten Ventil 19, welches in diesem Fall ein Expansionsorgan ist. Denkbar wäre auch die Aufbauvariante, dass das Kältemittel zuerst durch einen Kondensator- oder Gaskühlerbereich 34 des zweiten Wärmetauschers 7 und dann durch den einen 16 des ersten Wärmetauschers 5 zum zweiten Ventil 19 geführt wird. Darauf erfolgt die Kältemittelleitung durch den Verdampferbereich 27 des zweiten Wärmetauschers 7 zurück in den Verdichter 3. Der zweite Wärmetauscher 7 ist als ein umschaltbarer Wärmetauscher mit in einem Gehäuse integrierten mit Kältemittel beaufschlagbaren Heizrohren und mit Kältemittel beaufschlagbaren Kühlrohren ausgebildet, wobei auch Verdampferbereich 27 und Kondensator- oder Gaskühlerbereich 34 gleichzeitig mit Kältemittel beaufschlagt werden können. Es existieren in der Kälteanlage 1 also praktisch zwei Kältemittelkreisläufe, die zumindest vom Verdichter 3 bis zur Abzweigung 9 zusammen verlaufen. Dargestellt ist die Ventilsteuerung 13 in erster Ventilschaltungsmöglichkeit mit geöffnetem ersten Ventil 11 und geschlossenem zweiten Ventil 19. So kann Kältemittel in einem Kondensator- oder Gaskühlerbereich 16 des ersten Wärmetauschers 5 und in einen Kondensator- oder Gaskühlerbereich 34 des zweiten Wärmetauschers 7 gesammelt bzw. verlagert werden und damit dem Kältemittelkreislauf durch den abzweigenden Bereich 23 entzogen werden. Die Ventilsteuerung 13 umfasst außerdem die in Figur 2 nicht gezeigte zweite Ventilschaltungsmöglichkeit mit geschlossenem ersten Ventil 11 und gleichzeitig geöffnetem zweiten Ventil 19. So kann gegebenenfalls im ersten Wärmetauscher 5 und zweiten Wärmetauscher 7 im Kondensator- der Gaskühlerbereich gesammeltes bzw. gelagertes Kältemittel in den Kältemittelkreislauf durch den abzweigenden Bereich 23 strömen und somit dorthin verlagert werden. Ferner enthält die Ventilsteuerung 13 die in Figur 2 nicht dargestellte dritte Ventilschaltungsmöglichkeit mit sowohl geöffnetem ersten Ventil 11 als auch geöffnetem zweiten Ventil 19. Damit ist ein durch den Bereich der Kältemittelleitung mit dem ersten und zweiten Ventil 11, 19 betriebener Kältemittelkreislauf freigeschaltet. Denkbar ist eine in den Ventilen 11 und 19 enthalte Ventilsteuerung die beispielsweise automatisch je nach entsprechenden Sensorsignalen über die im durch den abzweigenden Bereich 23 verlaufenden Kältemittelkreislauf strömenden Kältemittelmenge die erste Ventilschaltungsmöglichkeit beim Überschreiten einer bestimmten Kältemittelmenge und die zweite Ventilschaltungsmöglichkeit beim Unterschreiten einer bestimmten niedrigeren oder gleichen Kältemittelmenge einstellt.

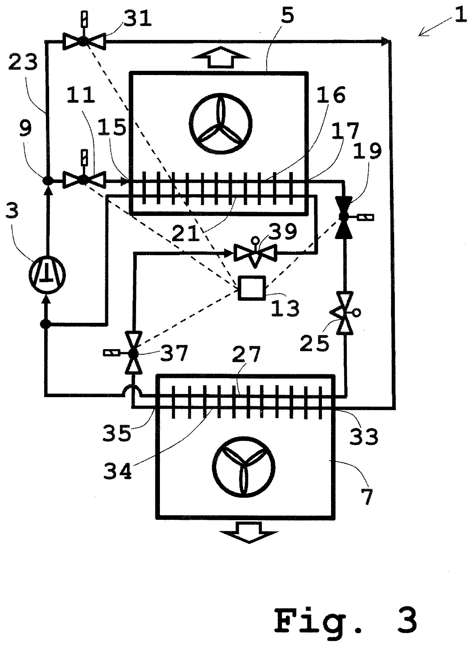

In Figur 3 ist ein weiteres Ausführungsbespiel einer Kälteanlage 1 in erster Ventilschaltungsmöglichkeit gezeigt. Ein erster Kältemittelkreislauf verläuft vom Verdichter 3 über die Abzweigung 9 durch das erste Ventil 11 in den Kondensator- oder Gaskühlereingang 15 des ersten Wärmetauschers 5 weiter durch den Kondensator- oder Gaskühlerbereich 16 aus dem Kondensator- oder Gaskühlerausgang 17 zum zweiten Ventil 19 zum Expansionsorgan 25, durch den Verdampferbereich 27 des zweiten Wärmetauschers 7 zurück zum Verdichter 3. Durch das geschlossene zweite Ventil 19 ist dieser Kältemittelkreislauf gerade nicht in Betrieb, sondern die Ventilsteuerung 13 hat zum Sammeln bzw. Verlagern von Kältemittel in den Kondensator- oder Gaskühlerbereich 16 des ersten Wärmetauschers 5 die erste Ventilschaltungsmöglichkeit mit gleichzeitig geöffnetem erstem Ventil geschaltet. Ferner enthält die Ventilsteuerung 13 für das erste Ventil 11 und zweite Ventil 19 die in Figur 3 nicht dargestellten zweite und dritte Ventilschaltungsmöglichkeiten. Ein zweiter Kältemittelkreislauf verläuft anfangs vom Verdichter 3 bis zur Abzweigung 9 gemeinsam mit dem ersten Kältemittelkreislauf. Nach der Abzweigung 9 geht der zweite Kältemittelkreislauf in Kältemittelleitung im abzweigenden Bereich 23 durch das dritte Ventil 31, durch den Kondensator- oder Gaskühlereingang 33 in den Kondensator- und Gaskühlerbereich 34 des zweiten Wärmetauschers 7 und von dort durch den Kondensator- oder Gaskühlerausgang 35 zum vierten Ventil 37 sowie darauf durch das Expansionsorgan 39 und den Verdampferbereich 21 des ersten Wärmetauschers 5 schließlich zurück zum Verdichter 3. Figur 3 zeigt für das dritte Ventil 31 und vierte Ventil 37 die dritte Ventilschaltungsmöglichkeit der Ventilsteuerung 13, also mit geöffnetem dritten Ventil 31 und geöffnetem vierten Ventil 37. Somit ist der zweite Kältemittelkreislauf momentan mit seiner Ventilschaltung auf Betrieb gestellt. Für das dritte Ventil 31 und das vierte Ventil 37 umfasst die Ventilsteuerung 13 auch die in Figur 3 nicht dargestellten erste und zweite Ventilschaltungsmöglichkeit, also mit erstens geöffnetem dritten Ventil 31 bei gleichzeitig geschlossenem vierten Ventil 37 oder zweitens mit geschlossenem dritten Ventil 31 bei gleichzeitig geöffnetem vierten Ventil 37. Eine sinnvolle Variante ist das Zusammenfallen von Abzweigung 9, erstem Ventil 11 und drittem Ventil 31 in einem einzigen Dreiwegeventil. Außerdem ist denkbar, dass das zweite Ventil 19 und/oder das vierte Ventil 37 auch als ein Expansionsorgan(e) ausgebildet sind/ist und entsprechend die zusätzlichen Expansionsorgane 25 und 39 im jeweiligen Kältemittelkreislauf wegfallen. Dafür kommen beispielsweise Drosselventile, elektrisch ansteuerbare Expansionsventile wie insbesondere Schrittmotorventile oder gepulste Magnetventile in Betracht. Denkbar ist auch eine Ventilsteuerung jeweils direkt am ersten, zweiten, dritten und vierten Ventil 11, 19, 31 und 37, wie beispielsweise bei Druckventilen oder Ventilen mit Sensorsteuerung zum Beispiel hinsichtlich der Kältemittelmenge. So ist es bei gerade betriebenem ersten Kältemittelkreislauf beim Überschreiben eines vorgegebenen Drucks bzw. Druckwerts nach dem Verdichter 3 oder beim Überschreiten einer vorgegebenen Kältemittelmenge bzw. Kältemittelmengenwerts im durchströmten ersten Kältemittelkreislauf mit der automatischen Ventilsteuerung 13 des Einstellens der ersten Ventilschaltungsmöglichkeit für das dritte Ventil 31 und das vierte Ventil 37 sowie entgegengesetzt beim Unterschreiten eines vorgegebenen Drucks bzw. Druckwerts nach dem Verdichter 3 beziehungsweise vor oder an dem jeweiligen Expansionsorgan 19, 25 des ersten Kältemittelkreislaufs oder beim Unterschreiten einer vorgegebenen Kältemittelmenge bzw. Kältemittelmengenwerts im betriebenen ersten Kältemittelkreislauf mit der automatischen Ventilsteuerung 13 des Einstellens der zweiten Ventilschaltungsmöglichkeit für das dritte Ventil 31 und vierte Ventil 37. Entsprechend schaltet die Ventilsteuerung 13 das erste Ventil 11 und das zweite Ventil 19 bei gerade durchströmtem bzw. betriebenem zweiten Kältemittelkreislauf. Es wird je nach dem, welcher der beiden Kältemittelkreisläufe gerade betrieben wird der gerade nicht als Kondensator oder Gaskühler mit Kältemittel durchströmte erste oder zweite Wärmetauscher 5, 7 für die Kältemittelverlagerung genutzt. Der erste und zweite Wärmetauscher 5, 7 sind in diesem Fall als umschaltbare Wärmetauscher mit in einem Gehäuse integrierten mit Kältemittel beaufschlagbaren Heizrohren und mit Kältemittel beaufschlagbaren Kühlrohren ausgebildet und im durch den jeweils anderen der beiden als Kondensator oder Gaskühler betreibbaren Wärmetauscher 5, 7 verlaufenden Kältemittelkreislauf als Verdampfer mit vorgeschaltetem Expansionsorgan betreibbar. Der jeweils gerade nicht als Kondensator oder Gaskühler betriebene Kondensator- oder Gaskühlerbereich 16, 34 wird dabei als Behälter zum Sammeln bzw. zum Verlagern von Kältemittel eingesetzt.

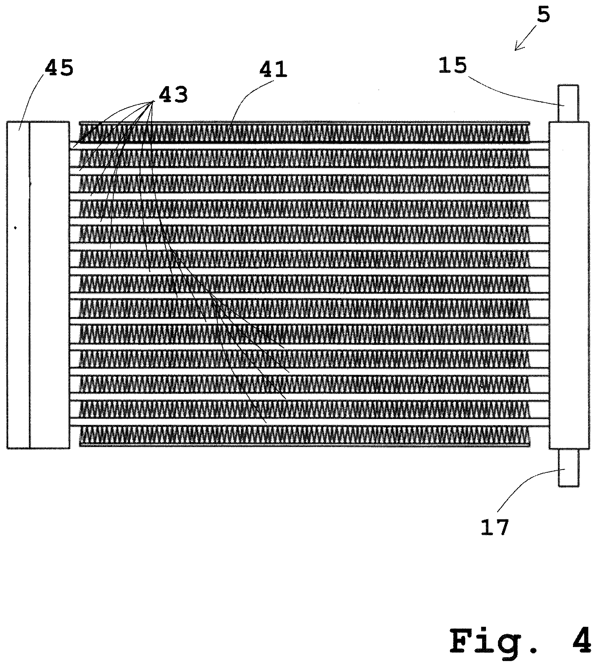

In Figur 4 ist als Beispiel eine Ausführungsform eines ersten Wärmetauschers 5 mit oben rechts einem Kondensator- oder Gaskühlereingang 15 und in seinem Kondensator- oder Gaskühlerbereich parallel zueinander verlaufenden als Flachrohre ausgebildeten Heizrohren 43 mit Lamellen 41 dazwischen abgebildet, der einen in Kältemittelleitung an die als Flachrohre ausgebildeten Heizrohre 43 angeschlossen Sammelbehälter 45 für Kältemittel enthält. Das Kältemittel kann so mit ausreichendem Volumen im ersten Wärmetauscher 5 gesammelt werden und je nach Bedarf durch den Kondensator- oder Gaskühlerausgang 17 wieder für den Betrieb des jeweiligen Kältemittelkreislaufs abgegeben werden. Der Sammelbehälter 45 kann auch an einer anderen Stelle im Kondensator- und Gaskühlerbereich des ersten und/oder zweiten Wärmetauschers 5, 7 angeordnet sein. Ferner sind mehrere Sammelbehälter 45 an unterschiedlichen Stellen in einem Kondensator- und Gaskühlerbereich eines Wärmetauschers denkbar.

Eine in Figur 3 gezeigte Kälteanlage 1 ist für den Einsatz in einem Fahrzeug ausgebildet wie beispielsweise auf einem oder teilintegriert in einem Fahrzeugdach eines Omnibusses einbaubar. Denkbar ist auch eine Kälteanlage 1 mit nicht nur erstem und zweitem Wärmetauscher 5, 7 sondern weiteren Wärmetauschern, wie beispielsweise einem dritten Wärmetauscher, der als Verdampfer in den Kältemittelkreisläufen durch die als Kondensator oder Gaskühler betreibbaren ersten und zweiten Wärmetauscher 5, 7 dient.

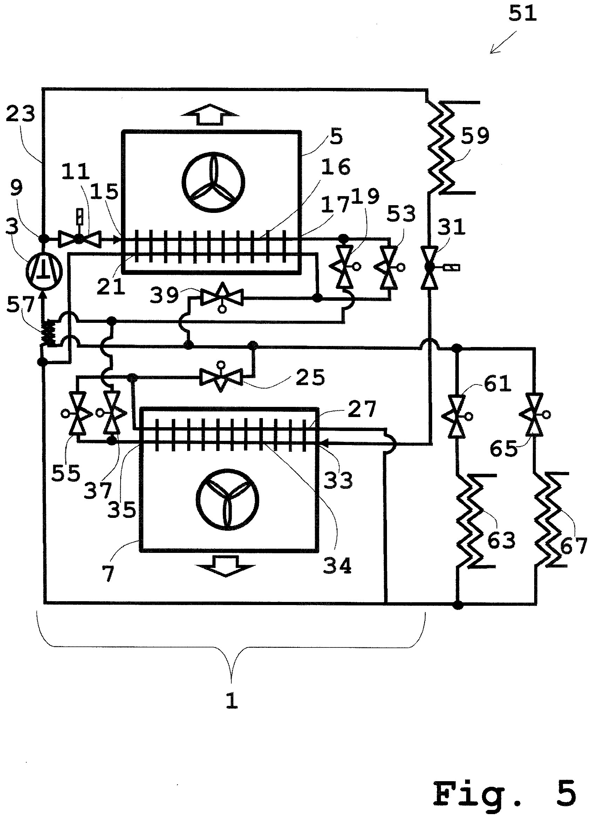

In Figur 5 ist ein Ausführungsbeispiel eines Kältemittelanlagensystems 51 mit einer Kälteanlage 1 und einem beispielhaft erweiterten Kältemittelkreislauf dargestellt. Auch hier teilt sich die Kältemittelleitung vom Verdichter 3 kommend an der Abzweigung 9 in einen abzweigenden Bereich 23 und einen durch das erste Ventil 11 zum Kondensator- oder Gaskühlereingang 15 des ersten Wärmetauschers 5 auf. Ein an den Kondensator- oder Gaskühlerbereich 16 des ersten Wärmetauschers 5 durch den Kondensator- oder Gaskühlerausgang 17 anschließender Weg der Kältemittelleitung führt durch das zweite Ventil 19 über einen inneren Wärmetauscher 57 zu den Expansionsorganen 25, 61 und 65 oder sogar zum Expansionsorgan 39. Die Ventilsteuerung erfolgt in diesem Fall direkt an den Ventilen. Denkbar ist aber auch eine zentrale Einheit als Ventilsteuerung. So dient bei erster Ventilschaltungsmöglichkeit für das erste Ventil 11 und das zweite Ventil 19, sofern neben dem zweiten Ventil 19 auch das weitere Ventil 53 geschlossen ist, der Kondensator- oder Gaskühlerbereich 16 des ersten Wärmetauschers 5 als Kältemittelsammler, in den Kältemittel verlagert wird. Bei der zweiten Ventilschaltungsmöglichkeit wird gegebenenfalls Kältemittel dann wieder an den gerade betriebenen Kältemittelkreislauf abgegeben. In dritter Ventilschaltungsmöglichkeit mit geöffnetem ersten Ventil 11 und geöffnetem zweiten Ventil 19 ist der dann weiter durch eins oder mehrere der Expansionsorgane 25, 61, 65 und 39 wie beispielsweise über Expansionsorgan 25 durch den Verdampferbereich 27 des zweiten Wärmetauschers 7 zurück zum Verdichter 3 verlaufende Kältemittelkreislauf betriebsbereit bzw. in Betrieb. Parallel zum Expansionsorgan 25 und Verdampferbereich 27 des zweiten Wärmetauschers 7 sind im Kältemittelanlagensystem 51 ein Expansionsorgan 61 mit beispielsweise nachgeschaltetem Plattenwärmetauscher 63 für Kaltwasser für Batterien sowie ein weiteres Expansionsorgan 65 vor einem Wärmetauscher 67 beispielsweise für Kaltluft für den Fahrer geschaltet. Statt oder neben diesen zusätzlichen Wärmetauschern für Fahrer und Batterien sind weitere und/oder andere Wärmetauscher zu Kühlzwecken im Kälteanlagensystem 51 denkbar.

Ferner ist nach dem Kondensator- oder Gaskühlerausgang 17 des ersten Wärmetauschers 5 und vor dem zweiten Ventil 19 ein Abzweig zu einem weiteren Ventil 53 enthalten, das in Kältemittelleitung vor oder am Verdampfereingang des ersten Wärmetauschers 5 angeordnet ist. Dieses weitere Ventil 53 ist in diesem Fall ein Expansionsorgan, wie beispielsweise ein Drosselventil. Bei geöffnetem weiterem Ventil 53 kann gegebenenfalls Kältemittel aus dem Kondensator- oder Gaskühlerbereich des ersten Wärmetauschers 5 über dessen Verdampferbereich 21 zum Verdichter 3 strömen und so dem gerade betriebenen Kältemittelkreislauf zugeführt werden. Es existiert also neben dem zweiten Ventil 19 eine weitere Möglichkeit im ersten Wärmetauscher 5 gesammeltes Kältemittel in den gerade betriebenen Kältemittelkreislauf zu verlagern.

Aber auch der Kondensator- oder Kältemittelbereich des zweiten Wärmetauschers 7 ist als Kältemittelsammler nutzbar. In Kältemittelleitung im abzweigenden Bereich 23 ist vor dem dritten Ventil 31 beispielsweise ein Plattenwärmetauscher 59 für Warmwasser für Konvektoren und Fahrer im Kälteanlagensystem 51 eingebunden. Das dritte Ventil 31 ist dem Kondensator- oder Gaskühlereingang 33 des zweiten Wärmetauschers 7 vorgeschaltet. Die Ventilsteuerung befindet sich in diesem Fall an den Ventilen. Es ist aber auch die Variante einer zentralen Ventilsteuerung denkbar. Bei eingestellter erster Ventilschaltungsmöglichkeit vom dritten Ventil 31 und vierten Ventil 37 sowie geschlossenem weiterem Ventil 55 dient der Kondensator- oder Gaskühlerbereich 34 des zweiten Wärmetauschers 7 als Kältemittelsammler. Dabei kann beispielsweise der Kondensator- oder Gaskühlerbereich 34 einen in Kältemittelleitung an die als Flachrohre ausgebildeten Heizrohre angeschlossen Sammelbehälter für Kältemittel umfassen. Ein an den Kondensator- oder Gaskühlerbereich 34 des zweiten Wärmetauschers 7 durch den Kondensator- oder Gaskühlerausgang 35 anschließender Weg der Kältemittelleitung führt durch das vierte Ventil 37 über einen inneren Wärmetauscher 57 zu den Expansionsorganen 25, 61 und 65 oder sogar zum Expansionsorgan 39. Bei der zweiten Ventilschaltungsmöglichkeit für das dritte Ventil 31 und vierte Ventil 37 wird gegebenenfalls Kältemittel dann wieder an den gerade betriebenen Kältemittelkreislauf abgegeben. Bei für das dritte Ventil 31 und das vierte Ventil 37 dritter Ventilschaltungsmöglichkeit ist der Kühlkreislauf über den abzweigenden Bereich 23 betriebsbereit bzw. in Betrieb.

Zusätzlich ist nach dem Kondensator- oder Gaskühlerausgang 35 des zweiten Wärmetauschers 7 und vor dem vierten Ventil 37 ein Abzweig zu einem weiteren Ventil 55 enthalten, das in Kältemittelleitung vor oder am Verdampfereingang des zweiten Wärmetauschers 7 angeordnet ist. Dieses weitere Ventil 55 ist in diesem Fall ein Expansionsorgan, wie beispielsweise ein Drosselventil. Bei geöffnetem weiterem Ventil 55 kann gegebenenfalls Kältemittel aus dem Kondensator- oder Gaskühlerbereich 34 des zweiten Wärmetauschers 7 über dessen Verdampferbereich 27 zum Verdichter 3 strömen und so dem gerade betriebenen Kältemittelkreislauf zugeführt werden. Somit existiert neben dem vierten Ventil 37 eine weitere Möglichkeit im zweiten Wärmetauscher 7 gesammeltes Kältemittel in den gerade betriebenen Kältemittelkreislauf zu verlagern. Die Ventile 11, 19, 31, 37, 53 und 55 sind nach Drücken bzw. Druckwerten im Kältemittelkreislauf gesteuerte Ventile. Es wird die beim Über- oder Unterschreiten eines bzw. zwei vorgegeben Drucks/Drücken des Kältemittels nach dem Verdichter 3 beziehungsweise vor oder an einem Expansionsorgan bei in einem Kältemittelkreislauf eingestellter dritter Ventilschaltungsmöglichkeit je nachdem die erste oder zweite Ventilschaltungsmöglichkeit im anderen gerade nicht mit Kältemittel durchströmten Kältemittelkreislauf geschaltet. Es ist aber auch eine zentrale Ventilsteuerung die beispielsweise Sensorsignale über die Kältemittelmenge gerade betriebenen Kältemittelkreislauf verarbeitet und die entsprechende Ventilschaltungsmöglichkeit schaltet, denkbar. Auch ist eine Ausgestaltung der Kälteanlage 1 mit zusätzlich zur automatischen Regelung auch möglicher bewusster Wahlmöglichkeit der Ventilschaltungsmöglichkeit in der Ventilsteuerung bei Bedienung der Kälteanlage 1 denkbar.

Das in Figur 5 gezeigte Kältemittelanlagensystem 51 ist flexibel zu betreiben, wobei sowohl der erste Wärmetauscher 5 als auch der zweite Wärmetauscher 7 für die Kältemittelverlagerung einsetzbar sind. Ein Kältemittelanlagensystem ist nicht auf das dargestellte Kältemittelanlagensystem 51 beschränkt, sondern kann beispielsweise mehrere solcher Kälteanlagen 1 sowie weitere angeschlossene Wärmetauscher umfassen. Es ist in einem Fahrzeug mit ein oder mehreren Kälteanlagen 1 zum Beispiels auf oder teilintegriert in einem Fahrzeugdach, wie beispielsweise bei einem Schienenfahrzeug, einsetzbar.

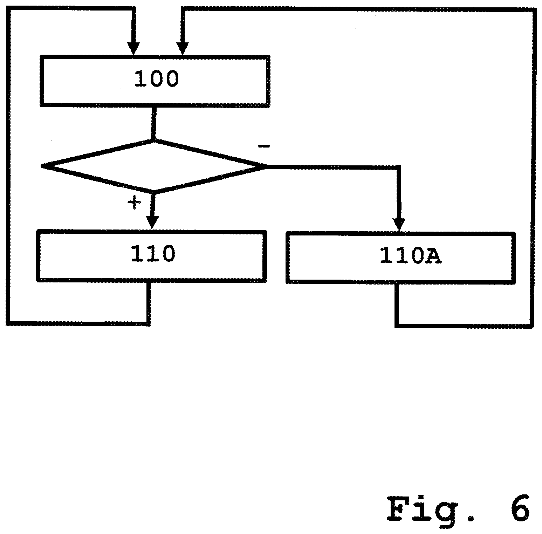

In Figur 6 ist als Flussdiagramm ein Ausführungsbeispiel eines Verfahrens zur Kältemittelverlagerung gezeigt. Das Verfahren findet beim Betrieb einer Kälteanlage wie in den Figuren 1a, 1b, 2, 3 und 5 dargestellt Anwendung. Im ersten Verfahrensschritt 100 wird erkannt, dass im momentan betriebenen Kältemittelkreislauf nach dem Verdichter der Druck des Kältemittels einen vorgegeben Druck bzw. Druckwert überschreitet. Eine Variante von Verfahrensschritt 100 ist das Erkennen, dass im gerade durchströmten Kältemittelkreislauf die Kältemittelmenge eine(n) vorgegebene(n) Wert bzw. Kältemittelmenge überschreitet. Im zweiten Verfahrensschritt 110 stellt dann die Ventilsteuerung für das erste und zweite Ventil die erste Ventilschaltungsmöglichkeit ein bzw. belässt diese Einstellung falls bereits vorhanden, also geöffnetem ersten und geschlossenem zweiten Ventil. Dadurch wird gegebenenfalls Kältemittel im Kondensator- oder Gaskühlerbereich des ersten Wärmetauschers gehalten oder gesammelt. Wenn im ersten Verfahrensschritt 100 hingegen erkannt wird, dass im momentan betriebenen Kältemittelkreislauf nach dem Verdichter der Druck des Kältemittels einen vorgegeben Druck bzw. Druckwert unterschreitet, dann erfolgt darauf statt des Verfahrensschritts 110 der Verfahrensschritt 110A. Eine Variante von diesem Verfahrensschritt 100 ist das Erkennen, dass im gerade durchströmten Kältemittelkreislauf die Kältemittelmenge eine(n) vorgegebene(n) Wert bzw. Kältemittelmenge unterschreitet. Im Verfahrensschritt 110A wird die zweite Ventilschaltungsmöglichkeit des für den momentan nicht als Kondensator oder Gaskühler mit Kältemittel durchströmten ersten Wärmetauschers eingestellt oder falls bereits erfolgt eingestellt gelassen. Dabei sind also das erste Ventil geschlossen und das zweite Ventil geöffnet. Das im Kondensator- oder Gaskühlerbereich des ersten Wärmetauschers gegebenenfalls vorhandene Kältemittel wird dem gerade betriebenen Kältemittelkreislauf zugeführt. Das Verfahren beginnt beim Betrieb der Kälteanlage regelmäßig wieder mit Verfahrensschritt 100.

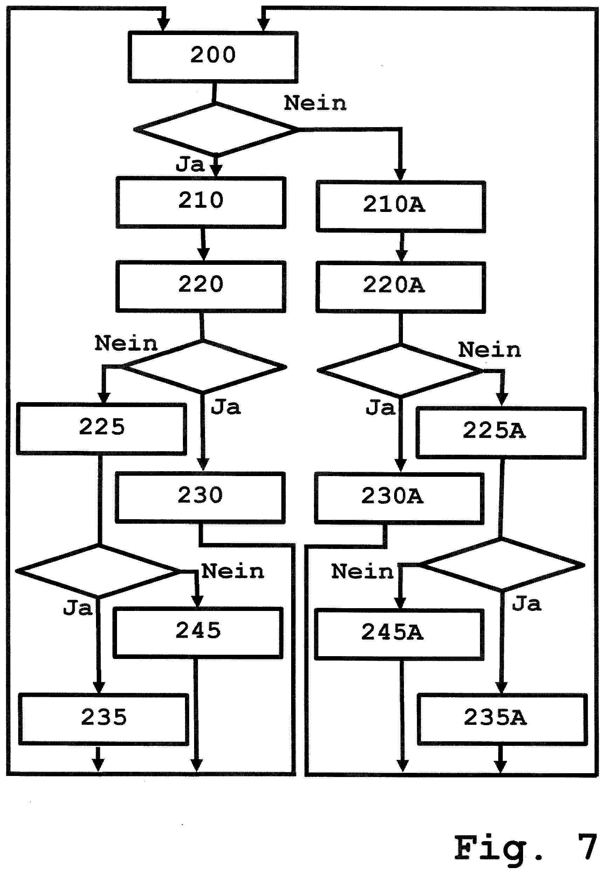

In Figur 7 ist als Flussdiagramm ein weiteres Ausführungsbeispiel eines Verfahrens zur Kältemittelverlagerung dargestellt. Das Verfahren findet beim Betrieb einer Kälteanlage bzw. eines Kälteanlagensystems wie in Figur 5 gezeigt Anwendung. Im ersten Verfahrensschritt 200 wird festgestellt, ob der erste durch den Kondensator- oder Gaskühlerbereich des ersten Wärmetauschers verlaufende Kältemittelkreislauf betrieben werden soll oder nicht und stattdessen der zweite durch den Kondensator- oder Gaskühlerbereich des zweiten Wärmetauschers verlaufende Kältemittelkreislauf. Die darauf erfolgende Entscheidung für den Fall, dass der erste Kältemittelkreislauf durchströmt werden soll, führt zum Verfahrensschritt 210, in dem die dritte Ventilschaltung für das erste und zweite Ventil also beide geöffnet eingestellt werden bzw. eingestellt bleiben. Darauf wird aufgrund von im Bereich nach dem Verdichter erfolgenden Messung des Kältemitteldrucks oder der Kältemittelmenge im betriebenen ersten Kältemittelkreislauf im Verfahrensschritt 220 erkannt, ob ein vorgegebener Druck bzw. Druckwert oder ein(e) vorgegebene(r) Kältemittelmenge bzw. Kältemittelmengenwert überschritten oder unterschritten ist. Falls eine Überschreitung festgestellt wird, wird mit der Entscheidung "Ja" der Weg mit Verfahrensschritt 230 eingeschlagen. Im Verfahrensschritt 230 wird für das dritte und vierte Ventil die erste Ventilschaltungsmöglichkeit mit geöffnetem dritten Ventil und gleichzeitig geschlossenem vierten Ventil eingestellt. Ferner wird dabei das Schließen des in der am oder nach dem Kondensator- oder Gaskühlerausgang des zweiten Wärmetauschers und vor dem vierten Ventil abzweigenden Kältemittelleitung und vor oder am Verdampfereingang des als umschaltbarer Wärmetauscher ausgebildeten zweiten Wärmetauschers angeordneten weiteren Ventils geschaltet.

Mit Verfahrensschritt 230 wird gegebenenfalls Kältemittel im Kondensator- oder Gaskühlerbereich des zweiten Wärmetauschers gehalten oder gesammelt. In bestimmten zeitlichen Abständen erfolgt ein erneutes Durchlaufen des Verfahrens beginnend mit Schritt 200. Wird hingegen im Verfahrensschritt 220 ein Unterschreiten festgestellt, wird mit der Entscheidung "Nein" der Weg mit Verfahrensschritt 225 eingeschlagen. Im Verfahrensschritt 225 wird je nach Bedarf, beispielsweise ob der Kondensator- oder Gaskühlerbereich des zweiten Wärmetauschers auch gekühlt werden soll oder nicht, beurteilt, ob eine Zuführung von Kältemittel in den gerade betriebenen Kältemittelkreislauf durch das vierte Ventil erfolgt oder nicht und stattdessen das gesammelte Kältemittel durch das weitere Ventil als Expansionsorgan, wie beispielsweise als Drosselventil, sowie durch den Verdampferbereich des zweiten Wärmetauschers, der ein umschaltbarer Wärmetauscher ist, dem ersten Kältemittelkreislauf zugeführt wird. Bei der Entscheidung "Ja" also Zuführung von Kältemittel durch das vierte Ventil erfolgt der Verfahrensschritt 235 mit der Schaltung der zweiten Ventilschaltungsmöglichkeit für das dritte und vierte Ventil bei gleichzeitigem Schließen des weiteren Ventils vor dem Verdampferbereich des zweiten Wärmetauschers und bei gleichzeitigem Schließen des zweiten Ventils und Öffnen des weiteren Ventils vor dem Verdampferbereich des ersten Wärmetauschers. Wird sich aufgrund der Feststellung im automatisch ablaufenden Verfahrensschritt 225 hingegen für "Nein" entschieden, erfolgt der Verfahrensschritt 245 mit dem Schließen des dritten und vierten Ventils sowie Öffnens des weiteren Ventils vor dem Verdampferbereich des zweiten Wärmetauschers. Auch darauf wird in bestimmten zeitlichen Abständen das Verfahren beginnend mit Schritt 200 wieder neu durchlaufen.

Wird in der Entscheidung aufgrund des anfänglichen Verfahrensschritts 200 der Betrieb des zweiten Kältemittelkreislaufs eingestellt, so entspricht das danach ablaufende Verfahren dem zuvor geschilderten mit den entsprechenden Verfahrensschritten 210A, 220A, 225A, 230A, 235A und 245A, wobei jedoch für das dritte und vierte Ventil die zuvor geschilderte Ventilschaltungsmöglichkeit für das erste und zweite Ventil und umgekehrt die für das erste und zweite Ventil die zuvor geschilderten Ventilschaltungsmöglichkeiten für das dritte und vierte Ventil gelten. Das weitere Ventil ist in diesem Fall das in der am oder nach dem Kondensator- oder Gaskühlerausgang des ersten Wärmetauschers und vor dem zweiten Ventil abzweigenden Kältemittelleitung und vor oder am Verdampfereingang des ersten Wärmetauschers, der ebenfalls ein umschaltbarer Wärmetauscher ist. Das Verfahren ist für eine solche Kälteanlage in einem Fahrzeug wie beispielsweise auf oder teilintegriert in einem Fahrzeugdach sowie für ein solche oder mehrere solcher Kälteanlagen umfassendes Kälteanlagensystem einsetzbar.

## Patentansprüche

1. Kälteanlage (1) zum Temperieren von Luft mit mindestens einem Verdichter (3), mindestens zwei Expansionsorganen und mindestens einem ersten (5) und einem zweiten (7) jeweils als Kondensator oder Gaskühler betreibbaren Wärmetauscher und mindestens einem von diesen oder weiteren als Verdampfer betreibbaren Wärmetauscher, wobei in Kältemittelleitung nach zumindest einem Verdichter (3) an oder nach einer Abzweigung (9) und vor oder am Kondensator- oder Gaskühlereingang (15) des ersten Wärmetauschers (5) ein erstes Ventil (11) und am oder nach dem Kondensator- oder Gaskühlerausgang (17) des ersten Wärmetauschers (5) und vor einem Expansionsorgan (25) der mindestens zwei Expansionsorgane oder als eines der mindestens zwei Expansionsorgane ein zweites Ventil (19) angeordnet sind, wobei die Kälteanlage (1) zumindest mit zur Kältemittelverlagerung eine Ventilsteuerung (13) für das erste (11) und zweite Ventil (19) enthält, die ausgebildet ist zum Steuern eines Schaltens zumindest einer ersten und einer zweiten Ventilschaltungsmöglichkeiten mit erstens geöffnetem ersten Ventil (11) bei gleichzeitig geschlossenem zweiten Ventil (19) oder zweitens mit geschlossenem ersten Ventil (11) bei gleichzeitig geöffnetem zweiten Ventil (19), **dadurch gekennzeichnet, dass** die Ventilsteuerung (13) die automatische Regelung umfasst, die ausgebildet ist, beim Überschreiten einer vorgegeben Kältemittelmenge im durchströmten Kältemittelkreislauf die erste Ventilschaltungsmöglichkeit für zumindest einen gerade nicht als Kondensator oder Gaskühler mit Kältemittel durchströmten Wärmetauscher (5, 7) einzustellen, und/oder die ausgebildet ist, beim Überschreiten eines vorgegebenen Drucks des Kältemittels nach dem Verdichter (3) im durchströmten Kältemittelkreislauf die erste Ventilschaltungsmöglichkeit für zumindest einen gerade nicht als Kondensator oder Gaskühler mit Kältemittel durchströmten Wärmetauscher (5, 7) einzustellen.

2. Kälteanlage (1) nach Anspruch 1 **dadurch gekennzeichnet, dass** die Ventilsteuerung (13) für das erste (11) und zweite Ventil (19) auch ausgebildet ist zum Steuern eines Schaltens einer dritten Ventilschaltungsmöglichkeit mit geöffnetem ersten (11) und gleichzeitig geöffnetem zweiten Ventil (19).

3. Kälteanlage (1) nach
Anspruch 1 oder 2, wobei in Kältemittelleitung an oder nach der Abzweigung (9) im abzweigenden Bereich (23) und vor oder am Kondensator- oder Gaskühlereingang des zweiten Wärmetauschers (7) ein drittes Ventil (31) und am oder nach dem Kondensator- oder Gaskühlerausgang des zweiten Wärmetauschers (7) und vor einem Expansionsorgan (39) der mindestens zwei Expansionsorgane oder als eines der mindestens zwei Expansionsorgane ein viertes Ventil (37) angeordnet sind, **dadurch gekennzeichnet, dass** die Kälteanlage (1) die Ventilsteuerung (13) für das dritte (31) und vierte Ventil (37) enthält, die ausgebildet ist zum Steuern eines Schaltens zumindest einer ersten und einer zweiten Ventilschaltungsmöglichkeit mit erstens geöffnetem dritten Ventil (31) bei gleichzeitig geschlossenem vierten Ventil (37) oder zweitens mit geschlossenem dritten Ventil (31) bei gleichzeitig geöffnetem vierten Ventil (37).

4. Kälteanlage (1) nach Anspruch 3 **dadurch gekennzeichnet, dass** die Ventilsteuerung (13) für das dritte (31) und vierte Ventil (37) auch ausgebildet ist zum Steuern eines Schaltens einer dritten Ventilschaltungsmöglichkeit mit geöffnetem dritten (31) und gleichzeitig geöffnetem vierten Ventil (37).

5. Kälteanlage (1) nach einem der Ansprüche 1 bis 4 **dadurch gekennzeichnet, dass** die Ventilsteuerung (13) die automatische Regelung umfasst, die ausgebildet ist, beim Unterschreiten einer vorgegeben Kältemittelmenge im durchströmten Kältemittelkreislauf und/oder beim Unterschreiten eines vorgegebenen Drucks des Kältemittels vor oder an einem Expansionsorgan (25, 39) im durchströmten Kältemittelkreislauf für zumindest einen gerade nicht als Kondensator oder Gaskühler mit Kältemittel durchströmten Wärmetauscher (5, 7) die zweite Ventilschaltungsmöglichkeit einzustellen.

6. Kälteanlage (1) nach einem der Ansprüche 1 bis 5 **dadurch gekennzeichnet, dass** der erste und/oder zweite Wärmetauscher (5, 7) als umschaltbare(r) Wärmetauscher mit in einem Gehäuse integrierten mit Kältemittel beaufschlagbaren Heizrohren (43) und mit Kältemittel beaufschlagbaren Kühlrohren ausgebildet sind/ist und im durch den jeweils anderen der beiden als Kondensator oder Gaskühler betreibbaren Wärmetauscher (5, 7) verlaufenden Kältemittelkreislauf als Verdampfer mit vorgeschaltetem Expansionsorgan (25, 39) betreibbar sind/ist.

7. Kälteanlage (1) nach einem der Ansprüche 1 bis 6 **dadurch gekennzeichnet, dass** zumindest einer der wenigstens ersten und zweiten als Kondensator oder Gaskühler betreibbaren Wärmetauscher (5, 7) in seinem Kondensator- oder Gaskühlerbereich (16, 34) wenigstens einen in Kältemittelleitung an die als Flachrohre ausgebildeten Heizrohre (43) angeschlossen Sammelbehälter (45) für Kältemittel umfasst.

8. Kälteanlage (1) nach einem der Ansprüche 1 bis 7 **dadurch gekennzeichnet, dass** in Kältemittelleitung am oder nach dem Kondensator- oder Gaskühlerausgang (17) des ersten Wärmetauschers (5) und vor dem zweiten Ventil (19) ein Abzweig zu einem weiteren Ventil (53) enthalten ist, das in Kältemittelleitung vor oder am Verdampfereingang des ersten Wärmetauschers (5) angeordnet ist.

9. Kälteanlage (1) nach einem der Ansprüche 1 bis 8 **dadurch gekennzeichnet, dass** in Kältemittelleitung am oder nach dem Kondensator- oder Gaskühlerausgang des zweiten Wärmetauschers (7) und vor dem vierten Ventil (37) ein Abzweig zu einem weiteren Ventil (55) enthalten ist, das in Kältemittelleitung vor oder am Verdampfereingang des zweiten Wärmetauschers (7) angeordnet ist.

10. Kälteanlage (1) nach Anspruch 8 oder 9 **dadurch gekennzeichnet, dass** das oder die weitere(n) Ventil(e) (53, 55) als Expansionsorgan(e) ausgebildet ist/sind.

11. Kälteanlage (1) nach Anspruch 10 **dadurch gekennzeichnet, dass** das oder die weitere(n) Ventil(e) (53, 55) als Drosselventil(e) ausgebildet ist/sind.

12. Kälteanlage (1) nach einem der Ansprüche 1 bis 11 **dadurch gekennzeichnet, dass** sie als Kälteanlage (1) für ein Fahrzeug ausgebildet ist.

13. Kälteanlagensystem (51) mit zumindest einer Kälteanlage (1) nach einem der Ansprüche 1 bis 12.

14. Verfahren zum Betrieb einer Kälteanlage (1) nach einem der Ansprüche 1 bis 12 oder einem Kälteanlagensystem (51) gemäß Anspruch 13, wonach die Ventilsteuerung (13) für das erste (11) und zweite Ventil (19) in der Weise geregelt wird, dass bei geschalteter erster Ventilschaltungsmöglichkeit gegebenenfalls Kältemittel im Kondensator- oder Gaskühlerbereich (16) des ersten Wärmetauschers (5) gehalten oder gesammelt wird (110) und bei geschalteter zweiter Ventilschaltungsmöglichkeit das im Kondensator- oder Gaskühlerbereich (16) des ersten Wärmetauschers (5) gegebenenfalls vorhandene Kältemittel dem gerade betriebenen Kältemittelkreislauf zugeführt wird (110A).

15. Verfahren nach Anspruch 14, wobei eine zu betreibende Kälteanlage (1) zumindest auch die zusätzlichen technischen Merkmale des Anspruchs 3 zu umfassen hat und wonach die Ventilsteuerung (13) für das dritte (31) und vierte Ventil (37) in der Weise geregelt wird, dass bei geschalteter erster Ventilschaltungsmöglichkeit gegebenenfalls Kältemittel im Kondensator- oder Gaskühlerbereich (34) des zweiten Wärmetauschers (7) gehalten oder gesammelt wird und bei geschalteter zweiter Ventilschaltungsmöglichkeit das im Kondensator- oder Gaskühlerbereich (34) des zweiten Wärmetauschers (7) gegebenenfalls vorhandene Kältemittel dem durch den Kondensator- oder Gaskühlerbereich (16) des ersten Wärmetauschers (5) betriebenen Kältemittelkreislauf zugeführt wird.

16. Verfahren nach Anspruch 14 oder 15 umfassend die Schritte,
a) des Erkennens (100) eines Unterschreiten einer vorgegeben Kältemittelmenge im momentan durchströmten Kältemittelkreislauf und/oder eines Unterschreiten eines vorgegebenen Drucks des Kältemittels nach dem Verdichter (3) im momentan durchströmten Kältemittelkreislauf,
b) des Einstellens (110) der für den momentan nicht als Kondensator oder Gaskühler mit Kältemittel durchströmten Wärmetauscher (5, 7) zweiten Ventilschaltungsmöglichkeit.

17. Verfahren nach einem der Ansprüche 14 bis 16 wonach die Ventilsteuerung (13) für das erste (11) und zweite Ventil (19) und/oder, vorausgesetzt die zu betreibende Kälteanlage (1) umfasst zumindest auch die zusätzlichen technischen Merkmale des Anspruchs 3, für das dritte (31) und vierte Ventil (37) in der Weise geregelt wird, dass bei jeweils dritter Ventilschaltungsmöglichkeit mit geöffnetem ersten (11) und gleichzeitig geöffnetem zweiten Ventil (19) der erste Wärmetauscher (5) als Kondensator oder Gaskühler betrieben wird und/oder, vorausgesetzt die zu betreibende Kälteanlage (1) umfasst zumindest auch die zusätzlichen technischen Merkmale des Anspruchs 3, mit geöffnetem dritten (31) und gleichzeitig geöffnetem vierten Ventil (37) der zweite Wärmetauscher (7) als Kondensator oder Gaskühler betrieben wird.

18. Verfahren nach einem der Ansprüche 14 bis 17, wobei eine zu betreibende Kälteanlage (1) zumindest auch die zusätzlichen technischen Merkmale des Anspruchs 3 zu umfassen hat, umfassend die Schritte,
a) des Einstellens (210A) der für das dritte (31) und vierte Ventil (37) dritten Ventilschaltungsmöglichkeit,
b) des Schaltens des ersten als umschaltbarer Wärmetauscher ausgebildeten Wärmetauschers (5) als Verdampfer im durch den zweiten als Kondensator oder Gaskühler betriebenen Wärmetauscher (7) verlaufenden Kältemittelkreislauf.

19. Verfahren nach einem der Ansprüche 14 bis 18, wobei eine zu betreibende Kälteanlage (1) zumindest auch das zusätzliche technische Merkmal des Anspruchs 2 zu umfassen hat, umfassend die Schritte,
a) des Einstellens (210) der für das erste (11) und zweite Ventil (19) dritten Ventilschaltungsmöglichkeit,
b) des Schaltens des zweiten als umschaltbarer Wärmetauscher ausgebildeten Wärmetauschers (7) als Verdampfer im durch den ersten als Kondensator oder Gaskühler betriebenen Wärmetauscher (5) verlaufenden Kältemittelkreislauf.

20. Verfahren nach einem der Ansprüche 14 bis 19 umfassend die Schritte,
a) des Erkennens (100) eines Überschreitens eines vorgegeben Drucks des Kältemittels vorm oder am entweder geschlossenen ersten (11) oder, vorausgesetzt die zu betreibende Kälteanlage (1) umfasst zumindest auch die zusätzlichen technischen Merkmale des Anspruchs 3, geschlossenen dritten Ventil (31),
b) des Schaltens (110A) der ersten Ventilschaltmöglichkeit am entweder zuvor geschlossen ersten (11) oder, vorausgesetzt die zu betreibende Kälteanlage (1) umfasst zumindest auch die zusätzlichen technischen Merkmale des Anspruchs 3, am zuvor geschlossenen dritten Ventil (31).

21. Verfahren nach einem der Ansprüche 14 bis 20 umfassend die Schritte,
a) des Erkennens (100) eines Überschreitens einer vorgegeben Kältemittelmenge im momentan durchströmten Kältemittelkreislauf,
b) des Schaltens (110A) der ersten Ventilschaltmöglichkeit am entweder zuvor geschlossen ersten (11) oder, vorausgesetzt die zu betreibende Kälteanlage (1) umfasst zumindest auch die zusätzlichen technischen Merkmale des Anspruchs 3, am zuvor geschlossenen dritten Ventil (31).

22. Verfahren nach einem der Ansprüche 14 bis 21 umfassend die Alternative mit den Schritten
a) des Schaltens (245A) der Ventilschaltmöglichkeit mit geschlossenem ersten (11) und geschlossenem zweiten Ventil (19),
b) des Schaltens (245A) des Öffnens des in der am oder nach dem Kondensator- oder Gaskühlerausgang (17) des ersten Wärmetauschers (5) und vor dem zweiten Ventil (19) abzweigenden Kältemittelleitung und vor oder am Verdampfereingang des als umschaltbarer Wärmetauscher ausgebildeten ersten Wärmetauschers (5) angeordneten weiteren Ventils (53).

23. Verfahren nach einem der Ansprüche 14 bis 22, wobei eine zu betreibende Kälteanlage (1) zumindest auch die zusätzlichen technischen Merkmale des Anspruchs 3 zu umfassen hat, umfassend die Schritte,
a) des Schaltens (245) der Ventilschaltungsmöglichkeit mit geschlossenem dritten (31) und geschlossenem vierten Ventil (37),
b) des Schaltens (245) des Öffnens des in der am oder nach dem Kondensator- oder Gaskühlerausgang des zweiten Wärmetauschers (7) und vor dem vierten Ventil (37) abzweigenden Kältemittelleitung und vor oder am Verdampfereingang des als umschaltbarer Wärmetauscher ausgebildeten zweiten Wärmetauschers (7) angeordneten weiteren Ventils (55).

## Claims

1. Refrigeration installation (1) for controlling the temperature of air, comprising at least one compressor (3), at least two expansion elements and at least a first (5) and a second (7) heat exchanger that can each be operated as a condenser or gas cooler, and at least one of these heat exchangers or another heat exchanger that can be operated as an evaporator, wherein a first valve is arranged in the refrigerant line after at least one compressor (3), at or after a branch (9) and before or at the condenser or gas cooler inlet (15) of the first heat exchanger (5), and a second valve (19) is arranged at or after the condenser or gas cooler outlet (17) of the first heat exchanger (5) and before an expansion element (25) of the at least two expansion elements or as one of the at least two expansion elements, wherein the refrigeration installation (1) contains a valve controller (13) for the first (11) and second valve (19) at least inter alia for refrigerant displacement, which is designed to control switching between at least a first and a second valve set-up, firstly with an open first valve (11) with at the same time a closed second valve (19) or secondly with a closed first valve (11) with at the same time an open second valve (19), **characterized in that** the valve controller (13) comprises the automatic regulator, which, upon overshooting a predefined quantity of refrigerant in the refrigerant circuit through which refrigerant flows, is designed to adjust the first valve set-up for at least one heat exchanger (5, 7) through which refrigerant flows but is not currently operating as a condenser or gas cooler, and/or which, upon overshooting a predefined pressure of the refrigerant after the compressor (3) in the refrigerant circuit through which refrigerant flows, is designed to adjust the first valve set-up for at least one heat exchanger (5, 7) through which refrigerant flows but is currently not operating as a condenser or gas cooler.

2. Refrigeration installation (1) according to Claim 1, **characterized in that** the valve controller (13) for the first (11) and second valve (19) is also designed to control switching of a third valve set-up with an open first (11) valve and at the same time an open second valve (19).

3. Refrigeration installation (1) according to Claim 1 or 2, wherein a third valve (31) is arranged in the refrigerant line at or after the branch (9) in the branching region (23) and before or at the condenser or gas cooler inlet of the second heat exchanger (7), and a fourth valve (37) is arranged at or after the condenser or gas cooler outlet of the second heat exchanger (7) and before an expansion element (39) of the at least two expansion elements or as one of the at least two expansion elements, **characterized in that** the refrigeration installation (1) contains the valve controller (13) for the third (31) and fourth valve (37), which is designed to control switching between at least a first and a second valve set-up with a firstly open third valve (31) with at the same time a closed fourth valve (37) or secondly with a closed third valve (31) with at the same time an open fourth valve (37).

4. Refrigeration installation (1) according to Claim 3, **characterized in that** the valve controller (13) for the third (31) and fourth valve (37) is also designed to control switching of a third valve set-up with an open third (31) and at the same time a closed fourth valve (37).

5. Refrigeration installation (1) according to one of Claims 1 to 4, **characterized in that** the valve controller (13) comprises the automatic regulator which, upon undershooting a predefined quantity of refrigerant in the refrigerant circuit through which refrigerant flows and/or upon undershooting a predefined pressure of the refrigerant before or at an expansion element (25, 39) in the refrigerant circuit through which refrigerant flows, is designed to adjust the second valve set-up for at least one heat exchanger (5, 7) through which refrigerant flows but which is currently not operating as a condenser or gas cooler.

6. Refrigeration installation (1) according to one of Claims 1 to 5, **characterized in that** the first and/or second heat exchanger (5, 7) is/are designed as (a) switchable heat exchanger(s) integrated in a housing and having heating pipes (43) to which refrigerant can be applied and cooling pipes to which refrigerant can be applied, and can be operated as an evaporator with an upstream expansion element (25, 39) in the refrigerant circuit running through the respective other heat exchanger (5, 7) of the two that can be operated as a condenser or gas cooler.

7. Refrigeration installation (1) according to one of Claims 1 to 6, **characterized in that** at least one of the at least first and second heat exchangers (5, 7) that can be operated as a condenser or gas cooler has in its condenser or gas cooler region (16, 34) at least one reservoir (45) for refrigerant attached in the refrigerant line to the heating pipes (43) designed as flat tubes.

8. Refrigeration installation (1) according to one of Claims 1 to 7, **characterized in that** a branch to a further valve (53), which is arranged before or at the evaporator inlet of the first heat exchanger (5) in the refrigerant line, is contained in the refrigerant line at or after the condenser or gas cooler outlet (17) of the first heat exchanger (5) and before the second valve (19).

9. Refrigeration installation (1) according to one of Claims 1 to 8, **characterized in that** a branch to a further valve (55), which is arranged before or at the evaporator inlet of the second heat exchanger (7) in the refrigerant line, is contained in the refrigerant line at or after the condenser or gas cooler outlet of the second heat exchanger (7) and before the fourth valve (37).

10. Refrigeration installation (1) according to Claim 8 or 9, **characterized in that** the further valve(s) (53, 55) is/are designed as (an) expansion element(s) .

11. Refrigeration installation (1) according to Claim 10, **characterized in that** the further valve(s) (53, 55) is/are designed as (a) throttle valve(s).

12. Refrigeration installation (1) according to one of Claims 1 to 11, **characterized in that** it is designed as a refrigeration installation (1) for a vehicle.

13. Refrigeration installation system (51) comprising at least one refrigeration installation (1) according to one of Claims 1 to 12.

14. Method for operating a refrigeration installation (1) according to one of Claims 1 to 12 or a refrigeration installation system (51) according to Claim 13, according to which the valve controller (13) for the first (11) and second valve (19) is regulated in such a way that, when the first valve set-up is switched, refrigerant possibly present in the condenser or gas cooler region (16) of the first heat exchanger (5) is held or collected (110) and, when the second valve set-up is switched, the refrigerant possibly present in the condenser or gas cooler region (16) of the first heat exchanger (5) is supplied to the currently operated refrigerant circuit (110A).

15. Method according to Claim 14, wherein a refrigeration installation (1) to be operated must at least also comprise the additional technical features of Claim 3, and according to which the valve controller (13) for the third (31) and fourth valve (37) is regulated in such a way that when the first valve set-up is switched, refrigerant possibly present in the condenser or gas cooler region (34) of the second heat exchanger (7) is held or collected and, when the second valve set-up is switched, the refrigerant possibly present in the condenser or gas cooler region (34) of the second heat exchanger (7) is supplied to the refrigerant circuit operated by the condenser or gas cooler region (16) of the first heat exchanger (5).

16. Method according to Claim 14 or 15, comprising the steps
a) of detecting (100) undershooting of a predefined quantity of refrigerant in the refrigerant circuit through which refrigerant is currently flowing and/or undershooting a predefined pressure of the refrigerant after the compressor (3) in the refrigerant circuit through which refrigerant is currently flowing,
b) of adjusting (110) the second valve set-up for the heat exchanger (5, 7) through which refrigerant flows but which is currently not operating as a condenser or gas cooler.

17. Method according to one of Claims 14 to 16, according to which the valve controller (13) for the first (11) and second valve (19) and/or, assuming that the refrigeration installation (1) to be operated also comprises at least the additional technical features of Claim 3, for the third (31) and fourth valve (37) is regulated in such a way that in the respective third valve set-up with an open first (11) and at the same time an open second valve (19), the first heat exchanger (5) is operated as a condenser or gas cooler and/or, assuming that the refrigeration installation (1) to be operated also comprises at least the additional technical features of Claim 3, with an open third (31) and at the same time an open fourth valve (37), the second heat exchanger (7) is operated as a condenser or gas cooler.

18. Method according to one of Claims 14 to 17, wherein a refrigeration installation (1) to be operated must at least also comprise the additional technical features of Claim 3, comprising the steps
a) of adjusting (210A) the third valve set-up for the third (31) and fourth valve (37),
b) of switching the first heat exchange (5), designed as a switchable heat exchanger, as an evaporator in the refrigerant circuit running through the second heat exchanger (7) operated as a condenser or gas cooler.

19. Method according to one of Claims 14 to 18, wherein a refrigeration installation (1) to be operated must at least also comprise the additional technical feature of Claim 2, comprising the steps
a) of adjusting (210) the third valve set-up for the first (11) and second valve (19),
b) of switching the second heat exchanger (7), designed as a switchable heat exchanger, as an evaporator in the refrigerant circuit running through the first heat exchanger (5) operated as a condenser or gas cooler.

20. Method according to one of Claims 14 to 19, comprising the steps
a) of detecting (100) overshooting of a predefined pressure of the refrigerant in front of or at the either closed first (11) or, assuming the refrigeration installation (1) to be operated at least also comprises the additional technical features of Claim 3, closed third valve (31),
b) of switching (110A) the first valve set-up at the either previously closed first (11) or, assuming the refrigeration installation (1) to be operated at least also comprises the additional technical features of Claim 3, at the previously closed third valve (31).

21. Method according to one of Claims 14 to 20, comprising the steps
a) of detecting (100) overshooting of a predefined quantity of refrigerant in the refrigerant circuit through which refrigerant is currently flowing,
b) of switching (110A) the first valve set-up at the either previously closed first (11) or, assuming that the refrigeration installation (1) to be operated at least also comprises the additional technical features of Claim 3, at the previously closed third valve (31).

22. Method according to one of Claims 14 to 21, comprising the alternative having the steps
a) of switching (245A) the valve set-up with a closed first (11) and a closed second valve (19),
b) of switching (245A) the opening of the further valve (53) arranged in the refrigerant line branching off at or after the condenser or gas cooler outlet (17) of the first heat exchanger (5) and before the second valve (19) and arranged before or at the evaporator inlet of the first heat exchanger (5) designed as a switchable heat exchanger.

23. Method according to one of Claims 14 to 22, wherein a refrigeration installation (1) to be operated must at least also comprise the additional technical features of Claim 3, comprising the steps
a) of switching (245) the valve set-up with a closed third (31) and a closed fourth valve (37),
b) of switching (245) the opening of the further valve (55) arranged in the refrigerant line branching off at or after the condenser or gas cooler outlet of the second heat exchanger (7) and before the fourth valve (37) and arranged before or at the evaporator inlet of the second heat exchanger (7) designed as a switchable heat exchanger.

## Revendications

1. Installation frigorifique (1) pour la climatisation, présentant au moins un compresseur (3), au moins un organe de détente, au moins un premier échangeur de chaleur (5) et au moins un deuxième échangeur de chaleur (7) pouvant tous être utilisés comme condenseur ou comme évaporateur, au moins un de ces échangeurs de chaleur ou d'autres échangeurs de chaleur pouvant être utilisés comme évaporateurs,
une première soupape (11) étant disposée dans le conduit de fluide frigorifique en aval d'au moins un compresseur (3), sur ou en aval d'une dérivation (9) et en amont de ou sur l'entrée (15) de condenseur ou de refroidisseur de gaz du premier échangeur de chaleur (5), une deuxième soupape (19) étant disposée en amont du ou des organes de détente (25) ou en tant que l'un des deux ou plusieurs organes de détente,
l'installation frigorifique (1) contenant pour le déplacement du fluide frigorifique une commande (13) de la première soupape (11) et de la deuxième soupape (19) configurée pour commander la commutation d'au moins une première et une deuxième possibilité de commutation des soupapes dans la première desquelles la première soupape (11) est ouverte pendant que la deuxième soupape (19) est fermée et dans la deuxième desquelles la première soupape (11) est fermée pendant que la deuxième soupape (19) est ouverte,
**caractérisée en ce que**
la commande (13) des soupapes comporte une régulation automatique configurée pour établir la première possibilité de commutation de soupape pour le ou les échangeurs de chaleur (5, 7) traversés par le fluide frigorifique et non utilisés comme condenseurs ou refroidisseurs de gaz au moment où le débit de fluide frigorifique dans le circuit de fluide frigorifique dépasse un débit prédéterminé et/ou configurée pour établir la première possibilité de commutation de soupape pour au moins un échangeur de chaleur (5, 7) traversé par le fluide frigorifique et non utilisé comme condenseur ou refroidisseur de gaz au moment où la pression de fluide frigorifique dépasse une pression prédéterminée en aval du compresseur (3) dans le circuit de fluide frigorifique.

2. Installation frigorifique (1) selon la revendication 1, **caractérisée en ce que** la commande (13) de la première soupape (11) et de la deuxième soupape (19) est également configurée pour commander la commutation d'une troisième possibilité de commutation de soupapes dans laquelle la première soupape (11) et la deuxième soupape (19) sont ouvertes simultanément.

3. Installation frigorifique (1) selon les revendications 1 ou 2, dans laquelle une troisième soupape (31) est disposée dans le conduit de fluide frigorifique sur ou en aval de la dérivation (9), dans la zone dérivée (23) et en amont de ou sur l'entrée de condenseur ou de refroidisseur de gaz du deuxième échangeur de chaleur (7), et une quatrième soupape (37) est disposée en amont d'un des deux ou plusieurs organes de détente (39) ou en tant que l'un des deux ou plusieurs organes de détente, **caractérisée en ce que** l'installation frigorifique (1) contient une commande (13) de la troisième soupape (31) et de la quatrième soupape (37), configurée pour commander la commutation d'au moins une première ou une deuxième possibilité de commutation des soupapes dans la première desquelles la troisième soupape (31) est ouverte pendant que la quatrième soupape (37) est fermée et dans la deuxième desquelles la troisième soupape (31) est fermée pendant que la quatrième soupape (37) est ouverte.

4. Installation frigorifique (1) selon la revendication 3, **caractérisée en ce que** la commande (13) de la troisième soupape (31) et de la quatrième soupape (37) est également configurée pour commander la commutation d'une troisième possibilité de commutation de soupapes dans laquelle la troisième soupape (31) et la quatrième soupape (37) sont ouvertes simultanément.

5. Installation frigorifique (1) selon l'une des revendications 1 à 4, **caractérisée en ce que** la commande (13) des soupapes comporte une régulation automatique configurée pour établir la deuxième possibilité de commutation des soupapes pour le ou les échangeurs de chaleur (5, 7) traversés par le fluide frigorifique et non utilisés à ce moment comme condenseurs ou refroidisseurs de gaz au moment où le débit de fluide frigorifique dans le circuit de fluide frigorifique n'atteint pas un débit prédéterminé et/ou au moment où la pression de fluide frigorifique dans le circuit de fluide frigorifique en amont ou sur un organe de détente (25, 39) n'atteint pas une pression prédéterminée.

6. Installation frigorifique (1) selon l'une des revendications 1 à 5, **caractérisée en ce que** le premier et/ou le deuxième échangeur de chaleur (5, 7) sont configurés comme échangeurs de chaleur commutables avec, intégrés dans un boîtier, des tubes de chauffage (43) pouvant être alimentés en fluide frigorifique et des tubes de refroidissement pouvant être alimentés en fluide frigorifique, ces échangeurs de chaleur pouvant être utilisés comme évaporateurs raccordés en aval d'un organe de détente (25, 39) dans le circuit de fluide frigorifique qui traverse l'autre des deux échangeurs de chaleur (5, 7) pouvant être utilisés comme condenseurs ou refroidisseurs de gaz.

7. Installation frigorifique (1) selon l'une des revendications 1 à 6, **caractérisée en ce que** dans le conduit de fluide frigorifique, au moins l'un parmi le premier et/ou le deuxième échangeur de chaleur (5, 7) pouvant être utilisé comme condenseur ou refroidisseur de gaz comporte dans leur partie (16, 34) servant de condenseur ou de refroidisseur de gaz au moins un récipient (45) de collecte de fluide frigorifique raccordé aux tubes de chauffage (43) configurés comme tubes plats.

8. Installation frigorifique (1) selon l'une des revendications 1 à 7, **caractérisée en ce que** sur ou en aval de la sortie (17) de condenseur ou de refroidisseur de gaz du premier échangeur de chaleur (5) et en amont de la deuxième soupape (19), le conduit de fluide frigorifique contient une dérivation vers une autre soupape (53) qui est disposée dans le conduit de fluide frigorifique en amont de ou sur l'entrée d'évaporateur du premier échangeur de chaleur (5).

9. Installation frigorifique (1) selon l'une des revendications 1 à 8, **caractérisée en ce que** sur ou en aval de la sortie de condenseur ou de refroidisseur de gaz du deuxième échangeur de chaleur (7) et en amont de la quatrième soupape (37), le conduit de fluide frigorifique contient une dérivation vers une autre soupape (55) qui est disposée dans le conduit de fluide frigorifique en amont de ou sur l'entrée d'évaporateur du deuxième échangeur de chaleur (7).

10. Installation frigorifique (1) selon les revendications 8 ou 9, **caractérisée en ce que** la ou les autres soupapes (53, 55) sont configurées comme organes de détente.

11. Installation frigorifique (1) selon la revendication 10, **caractérisée en ce que** la ou les autres soupapes (53, 55) sont configurées comme soupapes d'étranglement.

12. Installation frigorifique (1) selon la revendication 11, **caractérisée en ce que** elle est configurée comme installation frigorifique (1) pour véhicule.

13. Système (51) d'installations frigorifiques présentant au moins une installation frigorifique (1) selon les revendications 1 à 12.

14. Procédé de conduite d'une installation frigorifique (1) selon l'une des revendications 1 à 12 ou d'un système (51) d'installations frigorifiques selon la revendication 13, dans lequel la commande (13) de la première soupape (11) et de la deuxième soupape (19) est régulée de telle sorte que lorsque la première possibilité de commutation des vannes est établie, le fluide frigorifique éventuellement présent dans la partie (16) formant le condenseur ou le refroidisseur de gaz du premier échangeur de chaleur (5) est retenue ou collectée et lorsque la deuxième possibilité de commutation des vannes est établie, le fluide frigorifique éventuellement présent dans la partie (16) formant le condenseur ou le refroidisseur de gaz du premier échangeur de chaleur (5) est amené au circuit de fluide frigorifique utilisé à ce moment.

15. Procédé selon la revendication 14, dans lequel une installation frigorifique (1) à utiliser comprend également les caractéristiques techniques supplémentaires de la revendication 3 et dans lequel la commande (13) de la troisième soupape (31) et de la quatrième soupape (37) est régulée de telle sorte que lorsque la première possibilité de commutation des vannes est établie, le fluide frigorifique éventuellement présent dans la partie (34) formant le condenseur ou le refroidisseur de gaz du deuxième échangeur de chaleur (7) est retenue ou collectée et lorsque la deuxième possibilité de commutation des vannes est établie, le fluide frigorifique éventuellement présent dans la partie (34) formant le condenseur ou le refroidisseur de gaz du premier échangeur de chaleur (5) est amené au circuit de fluide frigorifique utilisé par la partie (16) formant le condenseur ou le refroidisseur de gaz du $5.

16. Procédé selon les revendications 14 ou 15, comprenant les étapes qui consistent à :
a) détecter (100) que le débit de fluide frigorifique circulant à un instant prédéterminé dans le circuit de fluide frigorifique n'atteint pas un débit prédéterminé et/ou que la pression une pression prédéterminée de fluide frigorifique circulant à un instant prédéterminé dans le circuit de fluide frigorifique n'atteint pas une pression prédéterminée en aval du compresseur (3) et
b) établir (110) la deuxième possibilité de commutation des soupapes pour l'échangeur de chaleur (5, 7) traversé par le fluide frigorifique en tant que condenseur ou refroidisseur de gaz.

17. Procédé selon l'une des revendications 14 à 16, dans lequel la commande (13) de la première soupape (11) et de la deuxième soupape (19) et/ou pour la troisième soupape (31) et la quatrième soupape (37) à la condition que l'installation frigorifique (1) à conduire comprenne au moins aussi les caractéristiques techniques supplémentaires de la revendication 3, est régulée de telle sorte que dans la troisième possibilité de commutation des soupapes, dans laquelle la première soupape (11) et la deuxième soupape (19) sont ouvertes simultanément, le premier échangeur de chaleur (5) est utilisé comme condenseur ou refroidisseur de gaz, et/ou à la condition que l'installation frigorifique (1) à conduire comprenne au moins aussi les caractéristiques techniques supplémentaires de la revendication 3, dans laquelle la troisième soupape (31) et la quatrième soupape (37) sont ouvertes simultanément, le deuxième échangeur de chaleur (7) est utilisé comme condenseur ou refroidisseur de gaz.

18. Procédé selon l'une des revendications 14 à 17, dans lequel une installation frigorifique (1) à conduire doit comporter au moins aussi les caractéristiques techniques supplémentaires de la revendication 3, et comportant les étapes qui consistent à :
a) établir (210A) la troisième possibilité de commutation des soupapes pour la troisième soupape (31) et la quatrième soupape (37) et
b) commuter le premier échangeur de chaleur (5) configuré comme échangeur de chaleur commutable en évaporateur dans le circuit de fluide frigorifique contenant le deuxième échangeur de chaleur (7) utilisé comme condenseur ou refroidisseur de gaz.

19. Procédé selon l'une des revendications 14 à 18, dans lequel une installation frigorifique (1) à conduire doit comporter au moins aussi les caractéristiques techniques supplémentaires de la revendication 3, et comportant les étapes qui consistent à :
a) établir (210) la troisième possibilité de commutation des soupapes pour la première soupape (11) et la deuxième soupape (19) et
b) commuter le deuxième échangeur de chaleur (7) configuré comme échangeur de chaleur commutable en évaporateur dans le circuit de fluide frigorifique contenant le premier échangeur de chaleur (5) utilisé comme condenseur ou refroidisseur de gaz.

20. Procédé selon l'une des revendications 14 à 19, comportant les étapes qui consistent à :
a) détecter (100) qu'une pression prédéterminée de fluide frigorifique est dépassée en amont de ou sur la première soupape (11) fermée ou la troisième soupape (31) fermée, à la condition que l'installation frigorifique (1) à conduire comprenne au moins aussi les caractéristiques techniques supplémentaires de la revendication 3 et
b) établir (110A) la première possibilité de commutation des soupapes sur ou la première soupape (11) préalablement fermée ou, à la condition que l'installation frigorifique (1) à conduire comprenne au moins aussi les caractéristiques techniques supplémentaires de la revendication 3, sur la troisième soupape (31) préalablement fermée.

21. Procédé selon l'une des revendications 14 à 20, comportant les étapes qui consistent à :
a) détecter (100) que le débit de fluide frigorifique qui circule dans le circuit de fluide frigorifique dépasse un débit prédéterminé et
b) établir (110A) la première possibilité de commutation des soupapes sur la première soupape (11) préalablement fermée ou, à la condition que l'installation frigorifique (1) à conduire comprenne au moins aussi les caractéristiques techniques supplémentaires de la revendication 3, sur la troisième soupape (31) préalablement fermée.

22. Procédé selon l'une des revendications 14 à 21, comportant la variante qui présente les étapes qui consistent à :
a) établir (245A) la possibilité de commutation des soupapes dans laquelle la première soupape (11) et la deuxième soupape (19) sont fermées et
b) établir (245A) l'ouverture de l'autre soupape (53) disposée dans le conduit de fluide frigorifique qui est dérivé sur ou en aval de la sortie (17) de condenseur ou de refroidisseur de gaz du premier échangeur de chaleur (5) et en amont de la deuxième soupape (19) et disposée en amont de ou sur l'entrée d'évaporateur du premier échangeur de chaleur (5) configuré comme échangeur de chaleur commutable.

23. Procédé selon l'une des revendications 14 à 22, dans lequel une installation frigorifique (1) à conduire doit comporter au moins aussi les caractéristiques techniques supplémentaires de la revendication 3, et comportant les étapes qui consistent à :
a) établir (245) la possibilité de commutation des soupapes dans laquelle la troisième soupape (31) et la quatrième soupape (37) sont fermées et
b) établir (245) l'ouverture de l'autre soupape (55) disposée dans le conduit de fluide frigorifique qui est dérivé sur ou en aval de la sortie (17) de condenseur ou de refroidisseur de gaz du deuxième échangeur de chaleur (7) et en amont de ou sur l'entrée d'évaporateur du deuxième échangeur de chaleur (7) configuré comme échangeur de chaleur commutable.
